# EUROPEAN PATENT APPLICATION

(11) **EP 4 572 117 A1**
(43) Date of publication of application: **18.06.2025**
(21) Application number: 23852511.7
(22) Date of filing: 07.08.2023
(51) Int. Cl.: H02M 7/48, H02K 5/10, H02K 9/02, H02K 16/02

(54) **DRIVE DEVICE**

(30) Priority: 11.08.2022 JP 2022128558
(71) Applicant: DENSO CORPORATION, Kariya-city, Aichi 448-8661 (JP)
(72) Inventor: NAGAI, Shohei, Kariya- city Aichi 4488661 (JP); HAYASHI, Jiro, Kariya- city Aichi 4488661 (JP)
(74) Representative: TBK
(86) International application number: PCT/JP2023/028665
(87) International publication number: WO 2024/034549

(57) **Abstract**

An EPU (50) includes a motor unit (100), a blower device (120), and a labyrinth structure portion (700). The motor unit (100) includes a motor (61), an inverter (81), and a unit housing (101). The unit housing (101) accommodates the motor (61) and the inverter (81) in a unit space (102). In the unit housing (101), a unit inlet port (112) and a unit outlet port (114) are in communication with the unit space (102). In the EPU (50), as the blower device (120) blows air, cooling air flows into the unit space (102) from the unit inlet port (112) and flows out from the unit outlet port (114). The cooling air flows into the unit inlet port (112) after passing through the labyrinth structure portion (700). In the labyrinth structure portion (700), foreign matter is removed from the cooling air.

## Description

### CROSS REFERENCE TO RELATED APPLICATION

The present application is based on Japanese Patent Application No. 2022-128558 filed on August 11, 2022. The entire disclosures of all of the above applications are incorporated herein by reference.

### TECHNICAL FIELD

The present disclosure relates to a drive device.

### BACKGROUND ART

Patent Literature 1 discloses a drive device that drives an aircraft to fly. The drive device includes a motor, an inverter, and a case. The case includes a tubular portion and heat dissipation fins. The motor and the inverter are accommodated inside the tubular portion. The heat dissipation fins are provided on an outer surface of the tubular portion and dissipate heat of the motor and the inverter to an outside of the case.

### PRIOR ART LITERATURE

### PATENT LITERATURE

PATENT LITERATURE 1: FR3089716

### SUMMARY OF INVENTION

However, in Patent Literature 1, the heat of the motor and the inverter is released to outside air through the case. In the configuration, the outside air indirectly cools the motor and the inverter via the case. In such a configuration in which the motor and the inverter are indirectly cooled, an effect of cooling the drive device may be insufficient.

An object of the present disclosure is to provide a drive device capable of reducing occurrence of an abnormality caused by entry of foreign matter into an inside while realizing internal cooling by cooling air.

Multiple aspects disclosed in the description adopt different technical means to achieve respective objects. Reference numerals in parentheses in the claims and the section are an example indicating a correspondence relationship with specific means described in an embodiment to be described later as one aspect, and do not limit the technical scope.

In order to achieve the above object, a disclosed aspect is a drive device is to be driven by electric power. The drive device comprises: a motor configured to be supplied with electric power; an inverter configured to convert the electric power supplied to the motor; an accommodating housing accommodating at least one of the motor and the inverter; a housing inlet port provided in the accommodating housing and configured to allow cooling air, which is to cool an inside of the accommodating housing, to flow from an outside of the accommodating housing to the inside; a housing outlet port provided in the accommodating housing and configured to allow the cooling air to flow out to the outside of the accommodating housing; and a foreign matter restriction portion configured to restrict foreign matter from entering the inside of the accommodating housing from the housing inlet port.

According to the drive device, the cooling air flows to the inside of the accommodating housing from the housing inlet port and flows out from the housing outlet port to the outside of the accommodating housing. In the configuration, heat of the motor and the inverter is directly applied to the cooling air inside the accommodating housing. The heat is released to the outside of the accommodating housing from the housing outlet port together with the cooling air. Accordingly, the motor and the inverter can be cooled directly by the cooling air inside the accommodating housing.

However, when the cooling air flows to the inside of the accommodating housing, the foreign matter may enter the accommodating housing together with the cooling air. Meanwhile, according to the drive device, entry of the foreign matter from the housing inlet port is restricted by the foreign matter restriction portion. Therefore, occurrence of an abnormality in the drive device caused by the foreign matter entering the inside of the accommodating housing can be reduced.

As described above, in the drive device, the occurrence of an abnormality caused by entry of the foreign matter to the inside can be reduced while realizing internal cooling by the cooling air.

### BRIEF DESCRIPTION OF THE DRAWINGS

FIG. 1 is a vertical cross-sectional view of an EPU according to a first embodiment.
FIG. 2 is a horizontal cross-sectional view of an inverter device.
FIG. 3 is a vertical cross-sectional view of a periphery of a labyrinth structure in the EPU.
FIG. 4 is a vertical cross-sectional view of a labyrinth structure portion.
FIG. 5 is a diagram showing a configuration of an eVTOL.
FIG. 6 is a diagram showing an electrical configuration of a driving system.
FIG. 7 is a vertical cross-sectional view of the labyrinth structure portion according to a second embodiment.
FIG. 8 is a vertical cross-sectional view of the EPU according to a third embodiment.
FIG. 9 is a vertical cross-sectional view of a centrifugal separator.
FIG. 10 is a vertical cross-sectional view of the EPU according to a fourth embodiment.
FIG. 11 is a vertical cross-sectional view of the EPU according to a fifth embodiment.
FIG. 12 is a vertical cross-sectional view of a filter sheet.
FIG. 13 is a vertical cross-sectional view of the EPU according to a sixth embodiment.
FIG. 14 is a vertical cross-sectional view of the EPU according to a seventh embodiment.
FIG. 15 is a vertical cross-sectional view of the EPU according to an eighth embodiment.
FIG. 16 is a vertical cross-sectional view of the EPU according to a ninth embodiment.
FIG. 17 is a vertical cross-sectional view of the EPU according to a tenth embodiment.
FIG. 18 is a vertical cross-sectional view of the EPU according to an eleventh embodiment.
FIG. 19 is a vertical cross-sectional view of the EPU according to a twelfth embodiment.
FIG. 20 is a schematic vertical cross-sectional view of the EPU according to a thirteenth embodiment.
FIG. 21 is a schematic vertical cross-sectional view of the EPU according to a fourteenth embodiment.
FIG. 22 is a schematic vertical cross-sectional view of the EPU according to a fifteenth embodiment.
FIG. 23 is a schematic vertical cross-sectional view of the EPU according to a sixteenth embodiment.
FIG. 24 is a schematic vertical cross-sectional view of the EPU according to a seventeenth embodiment.
FIG. 25 is a schematic horizontal cross-sectional view of the EPU.
FIG. 26 is a schematic vertical cross-sectional view of the EPU according to an eighteenth embodiment.
FIG. 27 is a schematic horizontal cross-sectional view of the EPU.

### DESCRIPTION OF EMBODIMENTS

Hereinafter, multiple embodiments for carrying out the present disclosure will be described with reference to the drawings. In each embodiment, the same reference numerals are assigned to portions corresponding to the items described in the preceding embodiments, and a repetitive description thereof may be omitted. In each embodiment, when only a part of the configuration is described, another embodiment previously described can be employed for the other part of the configuration. Not only portions which are specifically clarified so as to be combined in each embodiment are capable of being combined, but also embodiments are capable of being partially combined with each other even though the combination is not clarified as long as no adverse effect is particularly generated with respect to the combination.

### <First Embodiment>

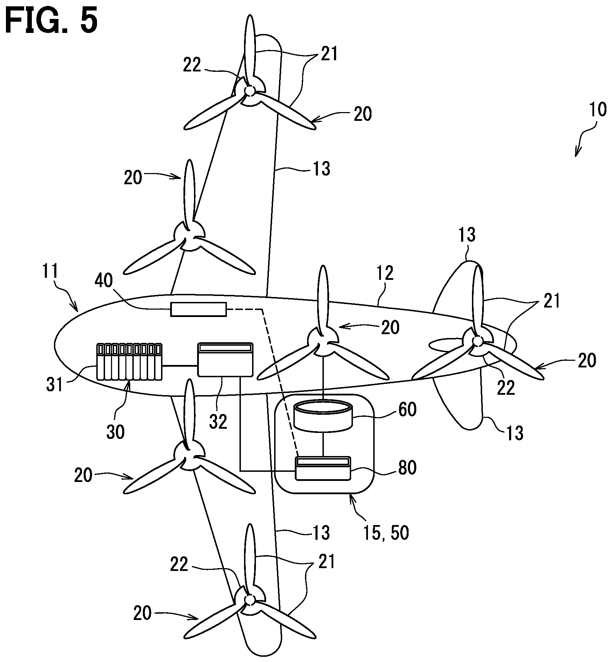

A driving system 30 shown in FIG. 5 is mounted on an eVTOL 10. The eVTOL 10 is an electric vertical take-off and landing aircraft, and can take off and land in a vertical direction. The eVTOL is an abbreviation of an electric vertical take-off and landing aircraft. The eVTOL 10 is an aircraft flying in the atmosphere and corresponds to a flight vehicle. The eVTOL 10 is also an electric-type electric aircraft and may be referred to as an electric flight vehicle. The eVTOL 10 is a manned aircraft carrying occupants. The driving system 30 is a system that drives the eVTOL 10 to fly.

The eVTOL 10 includes an airframe 11 and propellers 20. The airframe 11 includes an airframe main body 12 and wings 13. The airframe main body 12 is a body of the airframe 11 and has, for example, a shape extending in a front-rear direction. The airframe main body 12 has a passenger compartment for carrying occupants. Each of the wings 13 extends from the airframe main body 12 and multiple wings 13 are provided on the airframe main body 12. The wings 13 are fixed wings. The multiple wings 13 include a main wing, a tail wing, and the like.

Multiple propellers 20 are provided on the airframe 11. The eVTOL 10 is a multi-transponder including at least three propellers 20. For example, at least four propellers 20 are provided on the airframe 11. The propellers 20 are provided on the airframe main body 12 and the wings 13. Each of the propellers 20 rotates around a propeller axis. The propeller axis is, for example, a center line of the propeller 20. The propeller 20 can generate thrust and lift in the eVTOL 10. The propeller 20 may be referred to as a rotor or a rotary blade.

The propeller 20 includes blades 21 and a boss 22. The blades 21 are arranged in a circumferential direction of the propeller axis. The boss 22 couples the multiple blades 21. Each of the blades 21 extends from the boss 22 in a radial direction of the propeller axis. The propeller 20 includes a propeller shaft (not shown). The propeller shaft is a rotating shaft of the propeller 20 and extends along the propeller axis from the boss 22. The propeller shaft may be referred to as a propeller shaft.

The eVTOL 10 is a tilt-rotor aircraft. In the eVTOL 10, the propeller 20 can be tilted. That is, a tilt angle of the propeller 20 is adjustable. For example, when the eVTOL 10 ascends, an orientation of the propeller 20 is set such that the propeller axis extends in an upper-lower direction. In this case, the propeller 20 functions as a lift-rotor for generating lift in the eVTOL 10. The propeller 20 functions as a lift-rotor, enabling the eVTOL 10 to hover and take off and land vertically. When the eVTOL 10 moves forward, the orientation of the propeller 20 is set such that the propeller axis extends in a front-rear direction. In this case, the propeller 20 functions as a cruise-rotor for generating thrust in the eVTOL 10.

The eVTOL 10 includes a battery 31, a distributor 32, a flight control device 40, and EPUs 50. The battery 31, the distributor 32, the flight control device 40, and the EPU 50 are included in the driving system 30. The battery 31 is electrically connected to the multiple EPUs 50. The battery 31 is a power supplying unit that supplies electric power to the EDUs 50, and corresponds to a power supply unit. The battery 31 is a DC voltage source that applies a DC voltage to the EDUs 50. The battery 31 has a rechargeable secondary battery. The battery 31 also supplies electric power to the flight control device 40. In addition to or instead of the battery 31, a fuel cell, a generator, or the like may be used as the power supply unit.

The distributor 32 is electrically connected to the battery 31 and the multiple EPUs 50. The distributor 32 distributes the electric power from the battery 31 to the multiple EPUs 50. The electric power distributed to the EPUs 50 by the distributor 32 is drive power for driving the EPUs 50.

The flight control device 40 controls the driving system 30. The flight control device 40 performs flight control for causing the eVTOL 10 to fly. The flight control device 40 is communicably connected to the multiple EPUs 50. The flight control device 40 individually controls the multiple EPUs 50. The flight control device 40 controls the EPUs 50 via a control circuit 160 to be described later. The flight control device 40 controls the control circuit 160.

Each of the EPUs 50 is a device for driving the propeller 20 to rotate, and corresponds to a drive device. The EPU is an abbreviation of an electric propulsion unit. The EPU 50 may be referred to as a power drive device or a power drive system. The EPU 50 is provided individually for each of the multiple propellers 20. The EPU 50 is arranged on the propeller 20 along the propeller axis. All of the multiple EPUs 50 are fixed on the airframe 11. The EPU 50 rotatably supports the propeller 20. The EPU 50 is connected to the propeller 20. The propeller 20 is fixed to the airframe 11 with the EPU 50 interposed therebetween. When the tilt angle of the propeller 20 is changed, an angle of the EPU 50 is also changed.

The eVTOL 10 includes a propulsion device 15. The propulsion device 15 is a device for propelling the eVTOL 10. The eVTOL 10 can fly, such as lift, by propulsion of the propulsion device 15. The propulsion device 15 includes the propeller 20 and the EPU 50. In the propulsion device 15, the propeller 20 rotates as the EPU 50 is driven. The propeller 20 corresponds to a rotary body. The eVTOL 10 flies by rotating the propellers 20. That is, the eVTOL 10 moves by rotating the propellers 20. The eVTOL 10 corresponds to a moving object.

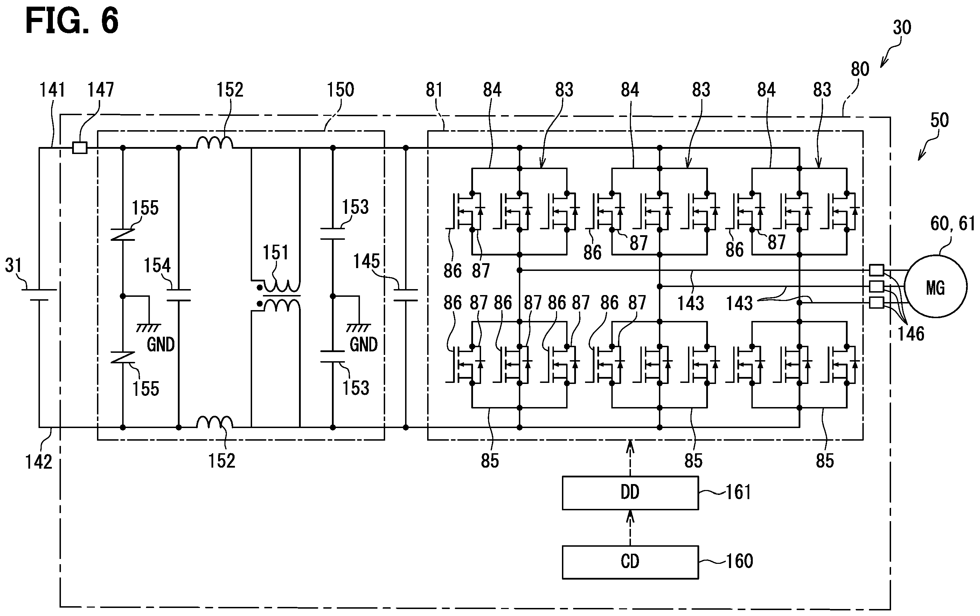

As shown in FIGS. 5 and 6, the EPU 50 includes a motor device 60 and an inverter device 80. For example, the EPU 50 includes one motor device 60 and one inverter device 80. The motor device 60 includes a motor 61. The inverter device 80 includes an inverter 81. The motor 61 is electrically connected to the battery 31 via the inverter 81. The motor 61 is driven in response to the electric power supplied from the battery 31 via the inverter 81.

The motor 61 is a multi-phase AC motor. The motor 61 is, for example, a three-phase AC motor, and has a U-phase, a V-phase, and a W-phase. The motor 61 is a moving driving source for moving the moving object, and functions as an electric motor. As the motor 61, for example, a brushless motor is used. The motor 61 functions as a generator during regeneration. The motor 61 includes motor coils of multiple phases. Each of the motor coils is a winding and forms an armature. The motor coils are provided respectively for the U-phase, the V-phase, and the W-phase. The motor 61 corresponds to a rotary electric machine, and the EPU 50 corresponds to a rotary electric machine unit.

In FIG. 6, the inverter 81 drives the motor 61 by converting the electric power to be supplied to the motor 61. The inverter 81 converts the electric power supplied to the motor 61 from a direct current to an alternating current. The inverter 81 is a power conversion unit that converts the electric power. The inverter circuit 81 is a multi-phase power conversion unit, and performs power conversion for each of the multiple phases. The inverter 81 is, for example, a three-phase inverter, and performs power conversion for each of the U-phase, the V-phase, and the W-phase. The inverter device 80 may be referred to as a power conversion device.

The inverter device 80 includes a P-line 141 and an N-line 142. The P-line 141 and the N-line 142 electrically connect the battery 31 and the inverter 81. The P-line 141 is electrically connected to a positive electrode of the battery 31. The N-line 142 is electrically connected to a negative electrode of the battery 31. In the battery 31, the positive electrode is an electrode on a high potential side, and the negative electrode is an electrode on a low potential side. The P-line 141 and the N-line 142 are power lines for supplying electric power. The P-line 141 is a power line on the high potential side and may be referred to as a high potential line. The N-line 142 is a power line on the low potential side and may be referred to as a low potential line.

The EPU 50 includes output lines 143. Each of the output lines 143 is a power line for supplying electric power to the motor 61. The output lines 143 electrically connect the motor 61 and the inverter 81. The output line 143 spans the motor device 60 and the inverter device 80.

The inverter device 80 includes smoothing capacitors 145 and an EMI filter 150. Each of the smoothing capacitors 145 is a capacitor that smooths the DC voltage supplied from the battery 31. The smoothing capacitor 145 is connected to the P-line 141 and the N-line 142 between the battery 31 and the inverter 81. The smoothing capacitor 145 is connected in parallel to the inverter 81.

The EMI filter 150 is a filter circuit that reduces electromagnetic noise. The EMI filter 150 is connected to the P-line 141 and the N-line 142 between the battery 31 and the inverter 81. The EMI filter 150 is, for example, connected in parallel to the smoothing capacitor 145 and the inverter 81.

The EMI filter 150 includes common-mode coils 151, normal-mode coils 152, Y capacitors 153, X capacitors 154, and varistors 155. Each of the common-mode coils 151 is a common-mode choke coil and can reduce common-mode noise. Each of the normal-mode coils 152 is a normal-mode choke coil and can reduce normal-mode noise. Each of the Y capacitors 153 is a line bypass capacitor and can reduce the common-mode noise. Each of the X capacitors 154 is an across-the-line capacitor and can reduce the normal-mode noise. Each of the varistors 155 can absorb a surge voltage and reduces the surge voltage. The Y capacitors 153 and the varistors 155 are grounded to a ground GND.

The inverter 81 is a power conversion circuit, for example, a DC-AC conversion circuit. The inverter 81 includes upper and lower arm circuits 83 corresponding to the multiple phases. For example, the inverter 81 includes the upper and lower arm circuits 83 respectively for the U-phase, the V-phase, and the W-phase. Each of the upper and lower arm circuits 83 may be referred to as a leg or arm circuit. Each of the upper and lower arm circuits 83 includes an upper arm 84 and a lower arm 85. The upper arm 84 and the lower arm 85 are connected in series to the battery 31. The upper arm 84 is connected to the P-line 141, and the lower arm 85 is connected to the N-line 142.

The output line 143 is connected to the upper and lower arm circuit 83 for each of the multiple phases. The output line 143 is connected between the upper arm 84 and the lower arm 85. The output line 143 connects the upper and lower arm circuit 83 and the coil for each of the multiple phases. The output line 143 is connected to the coil on a side opposite to a neutral point.

Each of the upper arm 84 and the lower arm 85 includes arm switches 86 and diodes 87. Each of the arm switches 86 is, for example, a transistor such as an MOSFET. The MOSFET is an abbreviation of a metal-oxide-semiconductor field-effect transistor. The arm switch 86 is a switching element, and can convert power by switching. The switch element may be a semi-conductor element such as a power element. The arm switch 86 is a conversion switch for converting electric power.

In the upper arm 84, a drain of the arm switch 86 is connected to the P-line 141. In the lower arm 85, a source of the arm switch 86 is connected to the N-line 142. The source of the arm switch 86 in the upper arm 84 and the drain of the arm switch 86 in the lower arm 85 are connected to each other. In each of the upper arm 84 and the lower arm 85, each of the diodes 87 is connected in antiparallel to the arm switch 86 for reflux. An anode of the diode 87 is connected to the source of the corresponding arm switch 86, and a cathode of the diode 87 is connected to the drain of the arm switch 86. The arm switch 86 may be referred to as a semiconductor switch.

Each of the upper arm 84 and the lower arm 85 includes multiple arm switches 86 and multiple diodes 87. In each of the upper arm 84 and the lower arm 85, the multiple arm switches 86 are connected in parallel, and the multiple diodes 87 are connected in parallel. In the arms 84, 85, multiple sets are connected in parallel with one arm switch 86 and one diode 87 as one set. For example, in each of the upper arm 84 and the lower arm 85, six arm switches 86 and six diodes 87 are connected in parallel.

The EPU 50 includes the control circuit 160 and a drive circuit 161. The control circuit 160 and the drive circuit 161 are included in the inverter device 80. The control circuit 160 controls driving of the inverter 81. The control circuit 160 controls driving of the motor 61 via the inverter 81. The control circuit 160 may be referred to as a motor control unit. In FIG. 6, the control circuit 160 is illustrated as CD, the drive circuit 161 is illustrated as DD, and the motor 61 is illustrated as MG.

The control circuit 160 is a control device such as an ECU. The ECU is an abbreviation of an electronic control unit. The control circuit 160 is mainly implemented by a microcomputer including, for example, a processor, a memory, an I/O, and a bus connecting these components. The memory is a non-transitory tangible storage medium that non-temporarily stores computer readable programs and data. The non-transitory tangible storage medium is a non-transitory tangible storage medium, and is implemented by a semi-conductor memory, a magnetic disk, or the like.

The control circuit 160 executes various types of processing related to the driving of the inverter 81 by executing the control programs stored in the memory. The control circuit 160 is electrically connected to an external device, the inverter 81, and various sensors. The external device is, for example, a host ECU such as an integrated ECU mounted on a moving object. The various sensors are provided in, for example, the EPU 50. The control circuit 160 controls the inverter 81 by outputting a command signal to the inverter 81. The control circuit 160 generates the command signal in response to a control signal received from the external device, detection signals received from the various sensors, and the like. The control circuit 160 controls the inverter 81 via the drive circuit 161. The control circuit 160 causes the inverter 81 to perform power conversion.

The drive circuit 161 is electrically connected to each of the arm switches 86 in the inverter 81. The drive circuit 161 drives the inverter 81 in response to the command signal from the control circuit 160. The drive circuit 161 drives the arm switch 86 by applying a drive voltage corresponding to the command signal to a gate of the arm switch 86. The drive circuit 161 is capable of turning on and off the arm switch 86. The drive circuit 161 may be referred to as a driver.

The inverter device 80 includes motor current sensors 146 and a battery current sensor 147. The motor current sensors 146 detect a current flowing through the motor 61. The motor current sensors 146 are provided for the output lines 143. The motor current sensors 146 detect the current flowing through the motor 61 via the output lines 143. The motor current sensors 146 are provided respectively for the U-phase, the V-phase, and the W-phase, for example. Each of the motor current sensors 146 is electrically connected to the control circuit 160 and outputs a detection signal to the control circuit 160.

The battery current sensor 147 detects a current flowing through the battery 31. The battery current sensor 147 is provided for the P-line 141. The battery current sensor 147 detects a current flowing from the battery 31 to the inverter 81 via the P-line 141. The battery current sensor 147 is electrically connected to the control circuit 160 and outputs a detection signal to the control circuit 160.

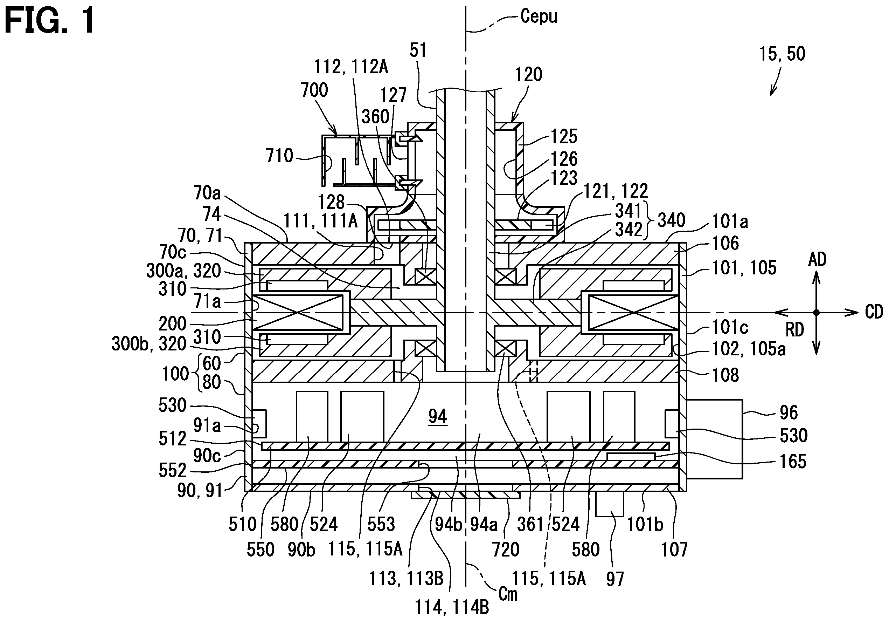

As shown in FIG. 1, the EPU 50 includes an EPU shaft 51. The EPU shaft 51 connects the motor 61 and the propeller 20. The EPU shaft 51 rotates together with the propeller 20 as the motor 61 is driven. The EPU shaft 51 rotates around an EPU axis Cepu. The EPU axis Cepu is a center line of the EPU shaft 51. The EPU axis Cepu coincides with the propeller axis.

In the propulsion device 15, the propeller 20 and the EPU 50 are arranged along the EPU axis Cepu. In the propulsion device 15, propeller wind is generated as the propeller 20 rotates. The propeller wind is gas such as air flowing from the propeller 20 toward the EPU 50 along the EPU axis Cepu. The propeller wind corresponds to a rotation wind. The EPU 50 is located on a downwind side of the propeller wind with respect to the propeller 20. When the propeller wind flows along an outer surface of the EPU 50, heat of the EPU 50 is released to the propeller wind. In this way, the EPU 50 is cooled from the outside by the propeller wind. That is, the EPU 50 is externally cooled by the propeller wind.

In the EPU 50, the motor device 60 and the inverter device 80 are arranged in an axial direction AD along the motor axis Cm. The motor device 60 is located on an upwind side of the propeller wind with respect to the inverter device 80. The motor device 60 is provided between the propeller 20 and the inverter device 80 in the axial direction AD. The motor axis Cm is a center line of the motor 61 and is a virtual line extending linearly. The axial direction AD is a direction in which the motor axis Cm extends.

Regarding the motor axis Cm, the axial direction AD, a radial direction RD and a circumferential direction CD are orthogonal to one another. The circumferential direction CD is a rotation direction of the motor 61. In the radial direction RD, an outer side may be referred to as a radially outer side, and an inner side may be referred to as a radially inner side. The motor axis Cm coincides with the EPU axis Cepu. The motor axis Cm may be located at a position deviated from the EPU axis Cepu in the radial direction RD. FIG. 1 illustrates a vertical cross-section of the EPU 50 taken along the motor axis Cm.

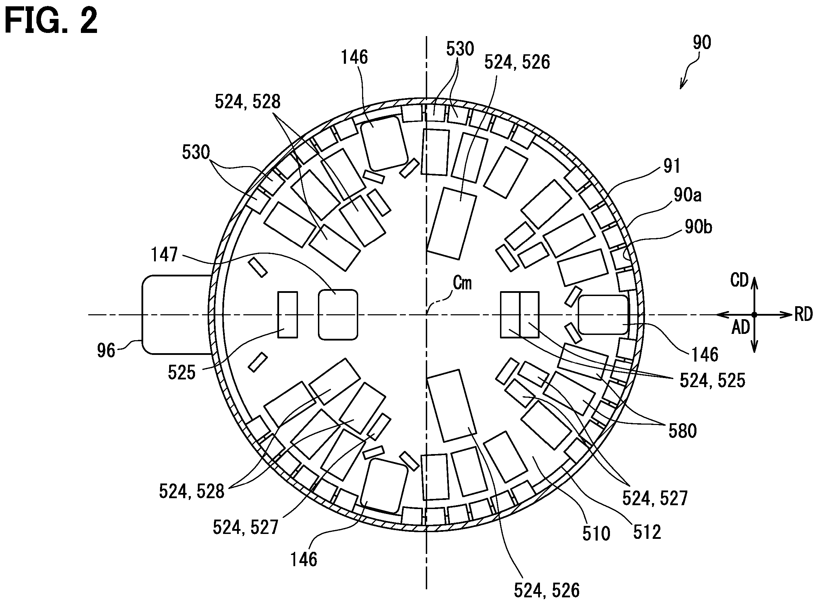

The EPU 50 includes a motor unit 100. The motor unit 100 includes the motor device 60 and the inverter device 80. In the motor unit 100, the motor device 60 and the inverter device 80 are integrally unitized. FIG. 2 illustrates a cross-section of the inverter device 80 taken perpendicular to the motor axis Cm.

The motor unit 100 includes a unit housing 101. The unit housing 101 accommodates the motor 61 and the inverter 81. The unit housing 101 is formed in a tubular shape as a whole and extends in the axial direction AD along the motor axis Cm. In the motor unit 100, the motor 61 and the inverter 81 are accommodated in the unit housing 101, and thus the motor device 60 and the inverter device 80 are integrated. The unit housing 101 corresponds to an accommodating housing.

The motor unit 100 has a unit upstream wall surface 101a, a unit downstream wall surface 101b, and a unit outer peripheral wall surface 101c. The wall surfaces 101a to 101c are included in an outer surface of the motor unit 100. The unit upstream wall surface 101a and the unit downstream wall surface 101b extend in a direction orthogonal to the motor axis Cm. The unit upstream wall surface 101a faces upstream in terms of the propeller wind. The unit downstream wall surface 101b faces downstream in terms of the propeller wind. The unit outer peripheral wall surface 101c extends in a direction orthogonal to the radial direction RD. The propeller wind easily flows in the axial direction AD along the unit outer peripheral wall surface 101c.

The unit housing 101 includes a unit outer peripheral wall 105, an upstream plate 106, a downstream plate 107, and a partition plate 108. Each of the unit outer peripheral wall 105 and the plates 106 to 108 is made of a metal material or the like and has a thermal conduction property. The unit outer peripheral wall 105 forms the unit outer peripheral wall surface 101c. The unit outer peripheral wall 105 extends in an annular shape in the circumferential direction CD. The upstream plate 106 forms the unit upstream wall surface 101a. The downstream plate 107 forms the unit downstream wall surface 101b. Each of the upstream plate 106 and the downstream plate 107 extends in a plate shape in a direction orthogonal to the axial direction AD. The unit outer peripheral wall 105 spans the upstream plate 106 and the downstream plate 107.

The unit housing 101 has a unit space 102. The unit space 102 is an internal space of the unit housing 101. The partition plate 108 is provided inside the unit housing 101. The partition plate 108 extends in a direction orthogonal to the axial direction AD. The partition plate 108 partitions to divide the unit space 102 in the axial direction AD. The partition plate 108 is provided between the upstream plate 106 and the downstream plate 107. The partition plate 108 is located at a position away from both the upstream plate 106 and the downstream plate 107 in the axial direction AD.

The plates 106 to 108 are members independent of the unit outer peripheral wall 105. The plates 106 to 108 are fixed to the unit outer peripheral wall 105 by bolts, welding, or the like. That is, the plates 106 to 108 are attached to the unit outer peripheral wall 105 later. One among the plates 106 to 108 and the unit outer peripheral wall 105 may be integrally formed. For example, the partition plate 108 and the unit outer peripheral wall 105 may be integrally formed.

The unit housing 101 has a unit inner wall surface 105a. The unit inner wall surface 105a is included in an inner surface of the unit housing 101. The unit inner wall surface 105a is formed by the unit outer peripheral wall 105. Of the pair of wall surfaces of the unit outer peripheral wall 105, a wall surface facing the radially inner side is the unit inner wall surface 105a, and a wall surface facing the radially outer side is the unit outer peripheral wall surface 101c.

The motor device 60 includes a motor housing 70 in addition to the motor 61. The motor housing 70 accommodates the motor 61. The motor housing 70 has a motor space 74. The motor space 74 is an internal space of the motor housing 70. The motor space 74 is a space that accommodates the motor 61. The motor housing 70 has a motor outer peripheral wall 71. The motor outer peripheral wall 71 extends in an annular shape in the circumferential direction CD. The motor space 74 is a space on an inner side of the motor outer peripheral wall 71.

The inverter device 80 includes an inverter housing 90 in addition to the inverter 81. The inverter housing 90 accommodates the inverter 81. The inverter housing 90 has an inverter space 94. The inverter space 94 is an internal space of the inverter housing 90. The inverter space 94 is a space that accommodates the inverter 81. The inverter housing 90 has an inverter outer peripheral wall 91. The inverter outer peripheral wall 91 extends in an annular shape in the circumferential direction CD. The inverter space 94 is a space on an inner side of the inverter outer peripheral wall 91.

In the unit housing 101, the motor housing 70 and the inverter housing 90 are integrated. The motor housing 70 and the inverter housing 90 are included in the unit housing 101. For example, the motor outer peripheral wall 71 and the inverter outer peripheral wall 91 are included in the unit outer peripheral wall 105. In the unit housing 101, the motor housing 70 and the inverter housing 90 are arranged in the axial direction AD. The inverter housing 90 is located on the downwind side of the propeller wind with respect to the motor housing 70. For example, in the unit outer peripheral wall 105, a portion on the upwind side is the motor housing 70, and a portion on the downwind side is the inverter housing 90.

In the unit housing 101, a portion forming the motor space 74 is the motor housing 70. For example, in the unit housing 101, the motor outer peripheral wall 71, the upstream plate 106, and the partition plate 108 form the motor housing 70. The motor housing 70 has a motor upstream wall surface 70a, a motor outer peripheral wall surface 70c, and a motor inner wall surface 71a. The motor upstream wall surface 70a is included in the unit upstream wall surface 101a. The motor outer peripheral wall surface 70c is included in the unit outer peripheral wall surface 101c. The motor inner wall surface 71a is included in the unit inner wall surface 105a. The motor outer peripheral wall surface 70c and the motor inner wall surface 71a are formed by the motor outer peripheral wall 71.

In the unit housing 101, a portion forming the inverter space 94 is the inverter housing 90. For example, in the unit housing 101, the inverter outer peripheral wall 91, the downstream plate 107, and the partition plate 108 form the inverter housing 90. The inverter housing 90 includes an inverter downstream wall surface 90b, an inverter outer peripheral wall surface 90c, and an inverter inner wall surface 91a. The inverter downstream wall surface 90b is included in the unit downstream wall surface 101b. The inverter outer peripheral wall surface 90c is included in the unit outer peripheral wall surface 101c. The inverter inner wall surface 91a is included in the unit inner wall surface 105a. The inverter outer peripheral wall surface 90c and the inverter inner wall surface 91a are formed by the inverter outer peripheral wall 91. The inverter inner wall surface 91a corresponds to an inner wall surface.

The motor space 74 and the inverter space 94 are arranged in the axial direction AD. The partition plate 108 is located between the motor space 74 and the inverter space 94. The motor space 74 and the inverter space 94 are partitioned by the partition plate 108. The motor space 74 is a space between the upstream plate 106 and the partition plate 108. The inverter space 94 is a space between the downstream plate 107 and the partition plate 108.

The motor 61 includes a stator 200, a first rotor 300a, a second rotor 300b, and a motor shaft 340. The stator 200 is a stator. The stator 200 includes the motor coils. Each of the rotors 300a, 300b is a rotor. The rotors 300a, 300b rotate relative to the stator 200. The rotors 300a, 300b rotate about the motor axis Cm. The motor axis Cm is a center line of each of the rotors 300a, 300b. The stator 200 and the motor coils extend in an annular shape in the circumferential direction CD. The center line of the stator 200 coincides with the motor axis Cm.

The motor device 60 is an axial gap-type rotary electric machine. The motor 61 is an axial gap-type motor. In the motor 61, the stator 200 and the rotors 300a, 300b are arranged in the axial direction AD along the motor axis Cm. The motor device 60 is a dual-rotor rotary electric machine. The motor 61 is a dual-rotor motor. The first rotor 300a and the second rotor 300b are arranged in the axial direction AD. The stator 200 is provided between two rotors, that is, the first rotor 300a and the second rotor 300b. The stator 200 is located at a position away from the rotors 300a, 300b in the axial direction AD. The motor 61 of the present embodiment may be referred to as a double-axial motor.

In the axial direction AD, the first rotor 300a is provided on an upstream plate 106 side. The first rotor 300a is located at a position away from the upstream plate 106 toward the partition plate 108. The first rotor 300a extends in the circumferential direction CD along the upstream plate 106. In the axial direction AD, the second rotor 300b is provided on a partition plate 108 side. The second rotor 300b is located at a position away from the partition plate 108 toward the upstream plate 106. The second rotor 300b extends in the circumferential direction CD along the partition plate 108. The rotors 300a, 300b are located at a position away from the motor outer peripheral wall 71 toward the radially inner side.

The motor shaft 340 supports the rotors 300a, 300b. The motor shaft 340 rotates around the motor axis Cm together with the rotors 300a, 300b. A center line of the motor shaft 340 coincides with the motor axis Cm. The motor shaft 340 connects the rotors 300a, 300b to the EPU shaft 51. The motor shaft 340 and the EPU shaft 51 are arranged in the axial direction AD. The center line of the motor shaft 340 coincides with the EPU axis Cepu. The center line of the motor shaft 340 may be located at a position deviated from the EPU axis Cepu in the radial direction RD.

The motor shaft 340 includes a shaft main body 341 and a shaft flange 342. The shaft main body 341 is formed in a tubular shape and extends in the axial direction AD along the motor axis Cm. The shaft flange 342 extends from the shaft main body 341 toward the radially outer side. The shaft flange 342 is fixed to the rotors 300a, 300b. The shaft flange 342 partitions the motor space 74 in the axial direction AD. The rotors 300a, 300b are located at positions away from the shaft main body 341 toward the radially outer side.

Each of the rotors 300a, 300b includes magnets 310 and a magnet holder 320. Multiple magnets 310 are arranged in the circumferential direction CD in each of the rotors 300a, 300b. Each of the magnets 310 is a permanent magnet and forms the magnetic field. The magnets 310 of the first rotor 300a and the magnets 310 of the second rotor 300b are arranged in the axial direction AD with the stator 200 interposed therebetween. The magnet holder 320 supports the magnets 310. The magnet holder 320 forms an outline of each of the rotors 300a, 300b as a whole. The magnet holder 320 is fixed to the shaft flange 342.

The motor device 60 includes an upstream bearing 360 and a downstream bearing 361. The bearings 360, 361 rotatably support the motor shaft 340. The upstream bearing 360 and the downstream bearing 361 are arranged in the axial direction AD with the shaft flange 342 interposed therebetween. The upstream bearing 360 is fixed to the upstream plate 106. The downstream bearing 361 is fixed to the partition plate 108.

The inverter device 80 includes a drive board 510, filter components 524, arm switch units 530, a control board 550, and smoothing capacitor units 580. The drive board 510, the filter components 524, the arm switch units 530, the control board 550, and the smoothing capacitor units 580 are accommodated in the inverter housing 90. The drive board 510, the arm switch units 530, and the like form the inverter 81. A microcomputer 165 is mounted on the control board 550. The control board 550, the microcomputer 165, and the like form the control circuit 160.

Each of the drive board 510 and the control board 550 is formed in a plate shape and extends in a direction orthogonal to the axial direction AD. Each of the drive board 510 and the control board 550 is a circuit board including a wiring pattern and the like. The drive board 510 and the control board 550 are arranged in the axial direction AD. The control board 550 is located between the drive board 510 and the downstream plate 107. In the axial direction AD, a distance between the drive board 510 and the control board 550 is smaller than a distance between the drive board 510 and the partition plate 108.

The drive board 510 partitions the inverter space 94 into a first drive space 94a and a second drive space 94b. The first drive space 94a and the second drive space 94b are included in the inverter space 94. The first drive space 94a and the second drive space 94b are arranged in the axial direction AD with the drive board 510 interposed therebetween. The first drive space 94a is a space between the drive board 510 and the partition plate 108. The second drive space 94b is a space between the drive board 510 and the downstream plate 107. The control board 550 is provided in the second drive space 94b.

The control board 550 has a board opening 553. The board opening 553 penetrates the control board 550 in the axial direction AD. The board opening 553 is provided at a center of the control board 550. The center of the board opening 553 is located at a position through which the motor axis Cm passes. An inner diameter of the board opening 553 is, for example, larger than an outer diameter of the shaft main body 341.

As shown in FIGS. 1 and 2, in the drive board 510, a drive board outer peripheral end 512 extends in the circumferential direction CD along the inverter inner wall surface 91a. The drive board outer peripheral end 512 is an outer peripheral end of the drive board 510. The drive board outer peripheral end 512 is located at a position away from the inverter inner wall surface 91a toward the radially inner side. In the control board 550, a control board outer peripheral end 552 extends in the circumferential direction CD along the inverter inner wall surface 91a. The control board outer peripheral end 552 is an outer peripheral end of the control board 550. The control board outer peripheral end 552 is located at a position in contact with or close to the inverter inner wall surface 91a. In the radial direction RD, a distance between the drive board outer peripheral end 512 and the inverter inner wall surface 91a is larger than a distance between the control board outer peripheral end 552 and the inverter inner wall surface 91a.

The drive board 510 has a first drive board surface 510a and a second drive board surface 510b. Of the pair of plate surfaces of the drive board 510, the plate surface facing the partition plate 108 is the first drive board surface 510a, and the plate surface facing the downstream plate 107 is the second drive board surface 510b. The second drive board surface 510b extends along the control board 550. The drive board 510 corresponds to a wiring board. The first drive board surface 510a corresponds to a first plate surface, and the second drive board surface 510b corresponds to a second plate surface.

The drive board 510 is a circuit board to which the electric power for driving the motor 61 is supplied. The drive board 510 may be referred to as a power board. Multiple filter components 524 and multiple smoothing capacitor units 580 are provided on the drive board 510. The filter components 524 and the smoothing capacitor units 580 are mounted on the drive board 510 while protruding from the first drive board surface 510a. In the drive board 510, a protruding dimension of the filter component 524 and a protruding dimension of the smoothing capacitor unit 580 are each larger than a distance between the drive board 510 and the control board 550 in the axial direction AD.

Each of the smoothing capacitor units 580 is a component including the smoothing capacitor 145. The smoothing capacitor unit 580 includes an element forming the smoothing capacitor 145, and a protective portion made of resin or the like for protecting the element.

As shown in FIG. 2, the multiple filter components 524 include common-mode coil units 525, normal-mode coil units 526, Y capacitor units 527, and X capacitor units 528. Each of the common-mode coil units 525 includes the common-mode coil 151. The common-mode coil unit 525 includes an element forming the common-mode coil 151 and a protective portion made of resin or the like for protecting the element. Multiple common-mode coil units 525 are provided on the drive board 510. Each of the normal-mode coil units 526 includes the normal-mode coil 152. The normal-mode coil unit 526 includes an element forming the normal-mode coil 152 and a protective portion made of resin or the like for protecting the element. Multiple normal-mode coil units 526 are provided on the drive board 510.

Each of the Y capacitor units 527 includes the Y capacitor 153. The Y capacitor unit 527 includes an element forming the Y capacitor 153 and a protective portion made of resin or the like for protecting the element. Multiple Y capacitor units 527 are provided on the drive board 510. Each of the X capacitor units 528 includes the X capacitor 154. The X capacitor unit 528 includes an element forming the X capacitor 154 and a protective portion made of resin or the like for protecting the element. Multiple X capacitor units 528 are provided on the drive board 510.

The current sensors 146, 147 are provided on the drive board 510 together with the smoothing capacitor units 580 and the like. The current sensors 146, 147 are mounted on the drive board 510 while protruding from the first drive board surface 510a. Multiple motor current sensors 146 are provided corresponding to the U-phase, the V-phase, and the W-phase. One battery current sensor 147 is provided corresponding to the P-line 141.

As shown in FIGS. 1 and 2, the inverter device 80 includes the arm switch units 530. Each of the arm switch units 530 includes the arm switch 86. The arm switch unit 530 includes an element such as a MOSFET forming the arm switch 86, and a protective portion made of a resin for protecting the element. The arm switch units 530 are arranged in the circumferential direction CD along the inverter inner wall surface 91a. The arm switch units 530 are provided on a side of the first drive board surface 510a facing the drive board 510. For example, each of the arm switch units 530 is located at a position away from the drive board 510 toward the partition plate 108.

The arm switch unit 530 includes a switch main body and a switch terminal. The switch main body includes an element such as a MOSFET and a protective portion. The switch main body is formed in, for example, a rectangular parallelepiped shape. The switch terminal is a terminal such as a drain terminal extending from the switch main body. In the arm switch unit 530, the switch main body is located at a position away from the drive board 510, and the switch terminal is connected to the drive board 510 in a conductive manner.

Multiple arm switch units 530 are arranged along the drive board outer peripheral end 512. The arm switch units 530 and the drive board outer peripheral end 512 are arranged in the axial direction AD. The arm switch units 530 are located across the drive board outer peripheral end 512 in the radial direction RD. In the radial direction RD, the distance between the inverter inner wall surface 91a and the drive board outer peripheral end 512 is smaller than a thickness of each of the arm switch units 530.

The arm switch unit 530 is provided on the inverter inner wall surface 91a. The arm switch unit 530 is provided on the inverter inner wall surface 91a such that heat of the arm switch unit 530 is transferred to the inverter outer peripheral wall 91. The arm switch unit 530 and the inverter outer peripheral wall 91 directly exchange heat. For example, the arm switch unit 530 is in contact with the inverter inner wall surface 91a. The arm switch unit 530 is fixed to the inverter outer peripheral wall 91 by a fixture such as a screw.

As long as the heat of the arm switch unit 530 is transmitted to the inverter outer peripheral wall 91, the arm switch unit 530 and the inverter inner wall surface 91a may not be in contact with each other. For example, a heat transfer member such as heat transfer gel may be provided between the arm switch unit 530 and the inverter inner wall surface 91a.

The arm switch unit 530 includes a diode 87 in addition to the arm switch 86. In the arm switch unit 530, an element forming the diode 87 is protected by the protective portion.

In the inverter device 80, the smoothing capacitor unit 580 is provided at a position away from the arm switch unit 530 toward the radially inner side. The smoothing capacitor unit 580 is located at a position away from the drive board outer peripheral end 512 toward the radially inner side. Multiple smoothing capacitor units 580 are arranged in the circumferential direction CD along the drive board outer peripheral end 512. The smoothing capacitor unit 580 is formed in a rectangular parallelepiped shape as a whole so as to extend in the radial direction RD. In the smoothing capacitor unit 580, a long side portion extends in the radial direction RD, and a short side portion extends in the circumferential direction CD.

Similarly to the smoothing capacitor unit 580, each of the filter components 524 is provided at a position away from the arm switch unit 530 toward the radially inner side. The filter component 524 is located at a position away from the smoothing capacitor unit 580 toward the radially inner side. Similarly to the smoothing capacitor unit 580, the filter components 524 are arranged in the circumferential direction CD. Each of at least a part of the filter components 524 is formed in a rectangular parallelepiped shape as a whole so as to extend in the radial direction RD. In each of the at least part of the filter components 524, a long side portion extends in the radial direction RD and a short side portion extends in the circumferential direction CD.

In the multiple filter components 524, multiple Y capacitor units 527 and multiple X capacitor units 528 are arranged in the circumferential direction CD. Each of the Y capacitor unit 527 and the X capacitor unit 528 is formed in a rectangular parallelepiped shape as a whole so as to extend in the radial direction RD. In each of the Y capacitor unit 527 and the X capacitor unit 528, a long side portion extends in the radial direction RD, and a short side portion extends in the circumferential direction CD.

In the inverter device 80, heat is more likely to be generated at locations closer to the radially outer side. The arm switch unit 530, the smoothing capacitor unit 580, and the filter component 524 are heat generation components that generate heat when energized. In the inverter device 80, a component that is more likely to generate heat when energized is provided closer to the radially outer side. The arm switch unit 530 is more likely to generate heat than the smoothing capacitor unit 580 and the filter component 524. Therefore, the arm switch unit 530 is provided on the radially outer side with respect to both the smoothing capacitor unit 580 and the filter component 524. For example, the arm switch unit 530 generates a larger amount of heat than both the smoothing capacitor unit 580 and the filter component 524, and is likely to have a high temperature.

The filter component 524 is less likely to generate heat than both the arm switch unit 530 and the smoothing capacitor unit 580. Therefore, the filter component 524 is provided on the radially inner side with respect to both the arm switch unit 530 and the smoothing capacitor unit 580. For example, the filter component 524 is less likely to have a higher temperature than both the arm switch unit 530 and the smoothing capacitor unit 580.

In the multiple filter components 524, the X capacitor unit 528 and the Y capacitor unit 527 are located on the radially inner side with respect to the smoothing capacitor unit 580. The X capacitor unit 528, the Y capacitor unit 527, and the smoothing capacitor unit 580 are located on the radially inner side with respect to the arm switch unit 530. Similarly to the smoothing capacitor unit 580, the X capacitor unit 528 and the Y capacitor unit 527 are less likely to generate heat than the arm switch unit 530. The arm switch unit 530 corresponds to a switch component. Each of the smoothing capacitor unit 580, the X capacitor unit 528, and the Y capacitor unit 527 corresponds to a capacitor component.

The inverter device 80 includes a power connector 96 and a signal connector 97. The power connector 96 and the signal connector 97 are connectors for connecting the inverter device 80 to external devices. Examples of the external device to which the power connector 96 is connected include the battery 31. For example, the power connector 96 is electrically connected to the battery 31 via a power cable or the like. Examples of the external device to which the signal connector 97 is connected include the flight control device 40. For example, the signal connector 97 is communicably connected to the flight control device 40 via a signal cable or the like.

The power connector 96 and the signal connector 97 are provided on an outer surface of the inverter housing 90. For example, the power connector 96 is provided on the inverter outer peripheral wall surface 90c. The signal connector 97 is provided on the inverter downstream wall surface 90b.

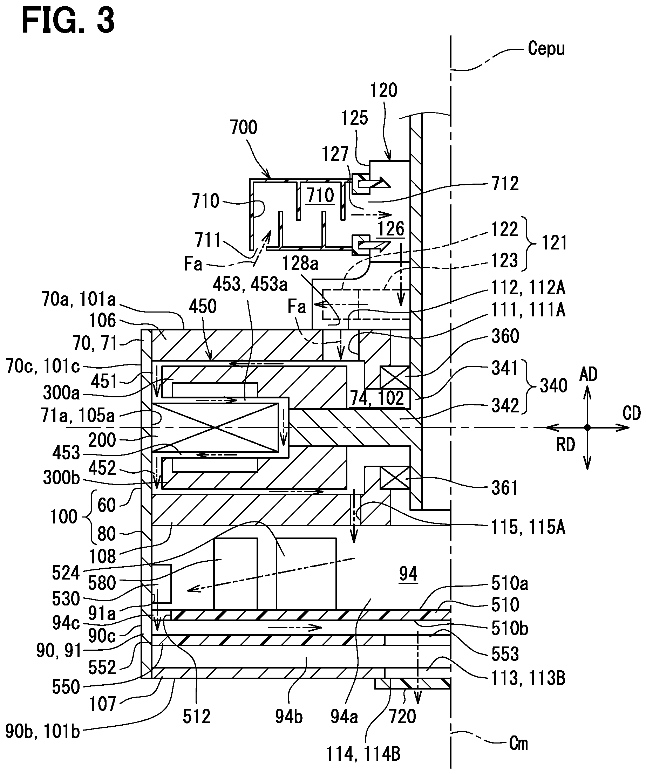

In the EPU 50, cooling air Fa (see FIG. 3) flows inside the motor unit 100. The cooling air Fa is gas such as outside air flowing inside the motor unit 100. The outside air is external air or the like flowing into the EPU 50 from the outside. For example, when the cooling air Fa flows into the unit space 102, heat of the motor 61 and the inverter 81 is applied to the cooling air Fa, and the heat is released to the outside of the motor unit 100 together with the cooling air Fa. In this way, the EPU 50 is cooled from the inner side by the cooling air Fa.

The motor unit 100 has unit inlet holes 111 and unit inlet ports 112. Each of the unit inlet ports 112 is an inlet port through which the cooling air Fa flows into the unit space 102 from the outside of the unit housing 101. The unit inlet port 112 is provided in an outer surface of the unit housing 101. The unit inlet port 112 corresponds to a housing inlet port.

Each of the unit inlet holes 111 is provided in the unit housing 101. The unit inlet hole 111 is in communication with the unit space 102. The unit inlet hole 111 opens the unit space 102 to the outside of the motor unit 100. The unit inlet hole 111 forms the unit inlet port 112. An outer side end portion of the unit inlet hole 111 is the unit inlet port 112.

The motor unit 100 has a unit outlet hole 113 and a unit outlet port 114. The unit outlet port 114 is an outlet port through which the cooling air Fa flows out from the unit space 102 to the outside of the unit housing 101. The unit outlet port 114 is provided in the outer surface of the unit housing 101. The unit outlet port 114 corresponds to a housing outlet port.

The unit outlet hole 113 is a hole penetrating the unit housing 101. The unit outlet hole 113 is in communication with the unit space 102. The unit outlet hole 113 opens the unit space 102 to the outside of the motor unit 100. The unit outlet hole 113 forms the unit outlet port 114. An outer side end portion of the unit outlet hole 113 is the unit outlet port 114.

In the motor unit 100, an inlet port area Sin and an outlet port area Sout are substantially equal to each other. Even if there is a difference between the inlet port area Sin and the outlet port area Sout, the difference is included in an allowable range. The inlet port area Sin is an area of the unit inlet port 112. The outlet port area Sout is an area of the unit outlet port 114. For example, an area ratio RA is included in the allowable range. The area ratio RA is a ratio of the inlet port area Sin to the outlet port area Sout. The area ratio RA is, for example, a value obtained by dividing the inlet port area Sin by the outlet port area Sout. That is, RA = Sin/Sout is established. The allowable range is a range between 0.8 and 1.2. That is, 0.8 < RA < 1.2 established.

In the present embodiment, the cooling air Fa flowing to an inside of the motor unit 100 cools the inverter 81 after cooling the motor 61. The motor unit 100 includes a motor inlet hole 111A and a motor inlet port 112A as the unit inlet hole 111 and the unit inlet port 112. The motor inlet port 112A is an inlet port through which the cooling air Fa flows into the motor space 74 from the outside of the unit housing 101. The motor inlet port 112A is provided in an outer surface of the motor housing 70. For example, the motor inlet port 112A is provided in the motor upstream wall surface 70a. The motor inlet port 112A corresponds to the housing inlet port.

The motor inlet hole 111A is provided in the motor housing 70. The motor inlet hole 111A is in communication with the motor space 74. For example, the motor inlet hole 111A penetrates the upstream plate 106 in the axial direction AD. The motor inlet hole 111A is provided between the shaft main body 341 and the stator 200 in the radial direction RD. The motor inlet hole 111A is located at a position inward of the motor outer peripheral wall 71 and closer to the shaft main body 341 in the radial direction RD. Multiple motor inlet holes 111A are arranged in the circumferential direction CD.

The motor unit 100 includes an inverter outlet hole 113B and an inverter outlet port 114B as the unit outlet hole 113 and the unit outlet port 114. The inverter outlet port 114B is an outlet port through which the cooling air Fa flows out from the inverter space 94 to the outside of the motor unit 100. The inverter outlet port 114B is provided in the outer surface of the inverter housing 90. For example, the inverter outlet port 114B is provided in the inverter downstream wall surface 90b. The inverter outlet port 114B corresponds to the housing outlet port.

The inverter outlet hole 113B is provided in the inverter housing 90. The inverter outlet hole 113B is in communication with the inverter space 94. For example, the inverter outlet hole 113B penetrates the downstream plate 107 in the axial direction AD. The inverter outlet hole 113B is provided at a center of the downstream plate 107. The center of the inverter outlet hole 113B is located at a position through which the motor axis Cm passes. An inner diameter of the inverter outlet hole 113B is, for example, larger than the outer diameter of the shaft main body 341.

The motor unit 100 has connection holes 115. Each of the unit connection holes 115 connects the motor space 74 and the inverter space 94 such that air can pass therebetween. The cooling air Fa flows from the motor space 74 into the inverter space 94 through the unit connection hole 115. The motor unit 100 includes a plate connection hole 115A as the unit connection hole 115. The plate connection hole 115A penetrates the partition plate 108 in the axial direction AD. The plate connection hole 115A is provided between the shaft main body 341 and the stator 200 in the radial direction RD. At least the plate connection hole 115A is provided on the radially inner side with respect to the smoothing capacitor unit 580. For example, the plate connection hole 115A is arranged on the radially inner side with respect to the filter components 524. The plate connection hole 115A is located inward of the unit outer peripheral wall 105 and closer to the shaft main body 341 in the radial direction RD. Multiple plate connection holes 115A are arranged in the circumferential direction CD.

The EPU 50 includes a blower device 120. The blower device 120 is a device for causing the cooling air Fa to flow to the inside of the motor unit 100. The cooling air Fa flows into the motor space 74, passes through the inverter space 94, and then flows out to the outside as the blower device 120 blows air. The blower device 120 causes the cooling air Fa to flow using the driving of the motor 61. The blower device 120 blows air accompanying the driving of the motor 61, and stops blowing air accompanying stop of the driving of the motor 61.

The blower device 120 is provided outside the motor unit 100. The blower device 120 is arranged on the motor unit 100 in the axial direction AD. The blower device 120 is provided on the upwind side of the propeller wind with respect to the motor unit 100. The blower device 120 is located at a position at which the cooling air Fa can flow into the motor inlet port 112A. The blower device 120 is provided on the upwind side facing the motor inlet port 112A.

The blower device 120 includes a blower fan 121 and a blower case 125. The blower case 125 accommodates the blower fan 121. The blower case 125 covers the motor inlet port 112A from the outside. The blower case 125 has a case space 126. The case space 126 is an internal space of the blower case 125. The blower case 125 has a case outer surface 125a and a case inner surface 125b. The case outer surface 125a is an outer surface of the blower case 125. The case inner surface 125b is an inner surface of blower case 125, and forms the case space 126.

The blower case 125 has a case inlet port 127 and case outlet ports 128. The case inlet port 127 and the case outlet ports 128 open the case space 126 to the outside of the blower case 125. The case inlet port 127 is an inlet port through which the cooling air Fa flows into the case space 126. The case inlet port 127 opens the case space 126 in a direction orthogonal to the axial direction AD. For example, the case inlet port 127 opens the case space 126 toward the radially outer side.

Each of the case outlet ports 128 is an outlet port through which the cooling air Fa flows out from the case space 126. The case outlet port 128 is in communication with the motor inlet port 112A. The case outlet port 128 connects the case space 126 and the motor inlet port 112A such that air can pass therebetween. The case outlet port 128 and the motor inlet port 112A are arranged in the axial direction AD. Similarly to the motor inlet port 112A, multiple case outlet ports 128 are arranged in the circumferential direction CD.

The blower fan 121 is a fan capable of sending the cooling air Fa. The blower fan 121 corresponds to a cooling air fan. The blower fan 121 is accommodated in the case space 126. The blower fan 121 is connected to the motor 61 via the EPU shaft 51. The blower fan 121 is provided on the EPU shaft 51 outside the motor unit 100. The blower fan 121 rotates around the motor axis Cm together with the EPU shaft 51. The blower fan 121 is an axial flow fan and blows air in the axial direction AD. In the blower device 120, the cooling air Fa flowing in from the case inlet port 127 flows out from the case outlet port 128 as the blower fan 121 rotates. The cooling air Fa flowing out from the case outlet port 128 flows into the motor inlet port 112A.

The blower fan 121 includes blower blades 122 and a blower boss 123. Multiple blower blades 122 are arranged in the circumferential direction CD. The blower boss 123 connects the multiple blower blades 122. Each of the blower blades 122 extends from the blower boss 123 toward the radially outer side. The blower boss 123 is fixed to the EPU shaft 51. The blower boss 123 extends in the circumferential direction CD along an outer peripheral surface of the EPU shaft 51. The blower blade 122 extends from the EPU shaft 51 toward the radially outer side. At least a part of the blower blades 122 are located at positions aligned with the case outlet ports 128 in the axial direction AD.

When the blower fan 121 blows air, as shown in FIG. 3, the cooling air Fa flows into the motor space 74 from the motor inlet port 112A, passes through the inverter space 94, and flows out from the inverter outlet port 114B.

In the motor space 74, at least a part of the cooling air Fa flows through a motor gap 450. The motor gap 450 is included in the motor space 74 and is a gap through which the cooling air Fa flows. The motor gap 450 is a labyrinth elongated space, and is bent at multiple portions. The motor gap 450 includes multiple bent portions. In the motor gap 450, multiple portions extending in the radial direction RD are arranged in the axial direction AD between the motor inlet port 112A and the unit connection hole 115 in the axial direction AD. The motor gap 450 extends in an annular shape in the circumferential direction CD along the motor inner wall surface 71a.

The motor gap 450 includes a first outer gap 451, a second outer gap 452, and an inner gap 453. The first outer gap 451 and the second outer gap 452 are arranged in the axial direction AD with the inner gap 453 interposed therebetween. The inner gap 453 connects the first outer gap 451 and the second outer gap 452. The first outer gap 451 is in communication with the motor inlet port 112A. The second outer gap 452 is in communication with the unit connection hole 115. The outer gaps 451, 452 and the inner gap 453 each include a portion extending in the radial direction RD and at least one bent portion.

The first outer gap 451 is a gap between the first rotor 300a and the motor housing 70. In the first outer gap 451, a gap between the first rotor 300a and the upstream plate 106 extends in the radial direction RD. The second outer gap 452 is a gap between the second rotor 300b and the motor housing 70. In the second outer gap 452, a gap between the second rotor 300b and the partition plate 108 extends in the radial direction RD.

The inner gap 453 is a gap between the rotors 300a, 300b and the stator 200. In the inner gap 453, a first axial gap 453a and a second axial gap 453b each extend in the radial direction RD. The first axial gap 453a is a gap between the first rotor 300a and the stator 200. The second axial gap 453b is a gap between the second rotor 300b and the stator 200.

In the motor space 74, at least a part of the cooling air Fa flowing in from the motor inlet port 112A flows into the motor gap 450. The cooling air Fa flows through the motor gap 450 along outer surfaces of the rotors 300a, 300b and an outer surface of the stator 200. The cooling air Fa flows through the motor gap 450 to cool the rotors 300a, 300b and the stator 200. In the motor gap 450, the cooling air Fa flows through the first outer gap 451 toward the radially outer side, and flows through the first axial gap 453a of the inner gap 453 toward the radially inner side. Thereafter, the cooling air Fa flows through the second axial gap 453b toward the radially outer side and flows through the second outer gap 452 toward radially inner side. Then, the cooling air Fa flows into the inverter space 94 from the motor gap 450 through the unit connection hole 115.

In the inverter space 94, the first drive space 94a is in communication with the unit connection hole 115. The second drive space 94b is in communication with the inverter outlet port 114B. The first drive space 94a and the second drive space 94b are connected by a drive gap 94c such that air can pass therebetween. The drive gap 94c is included in the inverter space 94. The drive gap 94c is a gap between the drive board 510 and the inverter outer peripheral wall 91. The drive gap 94c is a space between the drive board outer peripheral end 512 and the inverter inner wall surface 91a. The drive gap 94c extends in an annular shape in the circumferential direction CD along the drive board outer peripheral end 512. The drive gap 94c corresponds to a board gap.

In the inverter space 94, the cooling air Fa flows into the first drive space 94a from the unit connection hole 115. The cooling air Fa flows radially outward from the unit connection hole 115 toward the drive gap 94c. The cooling air Fa passes through the filter component 524 to reach the smoothing capacitor unit 580, and then passes through the arm switch unit 530 to reach the drive gap 94c. The cooling air Fa cools the smoothing capacitor units 580 after cooling the filter component 524, and then cools the arm switch unit 530. The cooling air Fa flows along the first drive board surface 510a to cool the drive board 510.

The cooling air Fa flows into the second drive space 94b from the drive gap 94c after cooling the arm switch unit 530. The cooling air Fa flows toward the radially inner side in the second drive space 94b. The cooling air Fa flows along the second drive board surface 510b to cool the drive board 510. After reaching the board opening 553 from the second drive space 94b, the cooling air Fa passes through the board opening 553 and flows to the outside from the unit outlet hole 113.

Inside the motor unit 100, a flow velocity or a flow rate of the cooling air Fa is less likely to be excessively large. For example, when the cooling air Fa flows through the labyrinth motor gap 450, the flow velocity or the flow rate of the cooling air Fa is limited. That is, the flow velocity or the flow rate of the cooling air Fa is prevented from being too high due to a pressure loss generated when the cooling air Fa flows through the motor gap 450. Therefore, occurrence of an abnormality in the motor unit 100 caused by an excessively high flow velocity or flow rate of the cooling air Fa is reduced.

For example, unlike the present embodiment, a configuration is assumed in which the motor space 74 does not have the labyrinth motor gap 450. In the configuration, the flow velocity or the flow rate of the cooling air Fa is not limited and tends to be excessively large. When the flow velocity or the flow rate of the cooling air Fa is excessively large, for example, an abnormality such as detachment of a mounted component mounted on the drive board 510 or the control board 550 is likely to occur. Meanwhile, when the flow velocity or the flow rate of the cooling air Fa is limited by the labyrinth motor gap 450 or the like as in the present embodiment, an abnormality such as detachment of the mounted component is less likely to occur.

Further, inside the motor unit 100, the motor 61 and the inverter 81 are easily cooled by the cooling air Fa. For example, in the motor space 74, the cooling air Fa flows through the motor gap 450 to turn back in the radial direction RD multiple times. Further, in the inverter space 94, since the drive gap 94c is located at a position away from the unit connection hole 115 and the unit outlet hole 113 toward the radially outer side, the cooling air Fa flows to turn back in the radial direction RD multiple times. As described above, a flow path through which the cooling air Fa flows is long in both the motor space 74 and the inverter space 94. Therefore, contact areas of the cooling air Fa with the motor 61 and the inverter 81 are increased, and heat is easily applied to the cooling air Fa from the motor 61 and the inverter 81. That is, an effect of cooling the motor 61 and the inverter 81 using the cooling air Fa tends to increase.

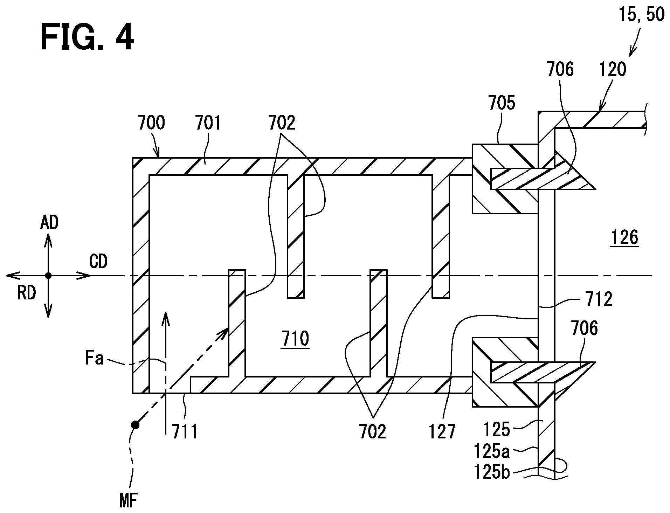

As shown in FIGS. 1 and 4, the EPU 50 includes a labyrinth structure portion 700. The labyrinth structure portion 700 restricts foreign matter MF (see FIG. 4) such as water or dust from entering the inside of the motor unit 100 from the motor inlet port 112A. The labyrinth structure portion 700 corresponds to a foreign matter restriction portion. The labyrinth structure portion 700 is attached to the blower device 120. The labyrinth structure portion 700 is provided on an outer side of the case inlet port 127. The labyrinth structure portion 700 restricts the foreign matter MF from entering the unit space 102 by restricting the foreign matter MF from entering the case inlet port 127.

The labyrinth structure portion 700 has a labyrinth passage 710. The labyrinth passage 710 is a labyrinth elongated passage and is bent at multiple portions. The labyrinth passage 710 includes multiple bent portions. The labyrinth passage 710 is a bent passage. In the labyrinth structure portion 700, the cooling air Fa passes through the labyrinth passage 710 to remove the foreign matter MF from the cooling air Fa.

The labyrinth passage 710 has labyrinth passage inlet ports 711 and a labyrinth passage outlet port 712. Each of the labyrinth passage inlet ports 711 is an inlet port through which the cooling air Fa flows into the labyrinth passage 710. The labyrinth passage outlet port 712 is an outlet port through which the cooling air Fa flows out from the labyrinth passage 710. The labyrinth passage inlet port 711 and the labyrinth passage outlet port 712 are arranged in the radial direction RD. In the labyrinth passage 710, multiple portions extending in the axial direction AD are arranged between the labyrinth passage inlet port 711 and the labyrinth passage outlet port 712 in the radial direction RD.

As shown in FIG. 4, the labyrinth structure portion 700 includes a labyrinth housing 701, labyrinth partition plates 702, a labyrinth support portion 705, and a labyrinth engagement portion 706. Each of the labyrinth housing 701, the labyrinth partition plates 702, the labyrinth support portion 705, and the labyrinth engagement portion 706 is formed of a resin material or the like. The labyrinth housing 701 covers the case inlet port 127 from the outside. The labyrinth housing 701 is formed in a tubular shape as a whole and extends in the radial direction RD. The labyrinth partition plates 702 partition an internal space of the labyrinth housing 701 such that the internal space of the labyrinth housing 701 becomes the labyrinth passage 710. The labyrinth support portion 705 supports the labyrinth housing 701. The labyrinth engagement portion 706 fixes the labyrinth support portion 705 to the blower case 125. The labyrinth engagement portion 706 is caught on the case inner surface 125b, for example.

The labyrinth passage inlet port 711 and the labyrinth passage outlet port 712 are provided in an outer surface of the labyrinth housing 701. The labyrinth passage outlet port 712 is in communication with the case inlet port 127. The labyrinth passage inlet port 711 is opened toward the downwind side of the propeller wind. The labyrinth passage inlet port 711 is opened toward a side opposite to the propeller 20 in the axial direction AD. The labyrinth passage inlet port 711 is not opened toward the upwind side of the propeller wind. Multiple labyrinth passage inlet ports 711 may be provided in the outer surface of the labyrinth housing 701. It is preferable that multiple labyrinth passage inlet ports 711 do not include the labyrinth passage inlet port 711 that is opened toward the upwind side of the propeller wind.

When the blower fan 121 blows air, the cooling air Fa is sucked through the labyrinth passage inlet port 711 and flows into the labyrinth passage 710. The cooling air Fa passes through the labyrinth passage 710 and reaches the case space 126. When the foreign matter MF enters the labyrinth passage inlet port 711 together with the cooling air Fa, the foreign matter MF tends to be caught on an inner surface of the labyrinth passage 710. For example, the foreign matter MF tends to be caught by the labyrinth partition plates 702. As described above, in the labyrinth structure portion 700, even if the foreign matter MF enters the labyrinth passage inlet port 711, the foreign matter MF is less likely to reach the labyrinth passage outlet port 712.

Since the labyrinth passage inlet port 711 faces the downwind side of the propeller wind, the foreign matter MF is unlikely to enter the labyrinth passage inlet port 711 together with the propeller wind. When an angle of the EPU 50 is changed as the tilt angle of the propeller 20 is changed, a direction of the labyrinth passage inlet port 711 is changed. For example, when the propeller 20 functions as a lift-rotor, the labyrinth passage inlet port 711 faces downward. In this case, even if the foreign matter MF enters the labyrinth passage inlet port 711 together with the cooling air Fa, the foreign matter MF tends to be discharged to the outside from the labyrinth passage outlet port 712 by own weight. When the propeller 20 functions as a cruise-rotor, the labyrinth passage inlet port 711 faces rearward of the eVTOL 10. Therefore, it is difficult for cruise wind, which is generated as the eVTOL 10 cruises, to flow into the labyrinth passage inlet port 711. Accordingly, the foreign matter MF is unlikely to enter the labyrinth passage inlet port 711 together with the cruise wind.

As shown in FIG. 1, the EPU 50 includes an outlet port filter 720. The outlet port filter 720 is provided to face the unit outlet port 114. The outlet port filter 720 covers the unit outlet port 114 from the outside. The outlet port filter 720 is fixed to the unit outer peripheral wall surface 101c by an adhesive or the like. The outlet port filter 720 restricts the foreign matter MF from entering the unit space 102 from the unit outlet port 114. For example, the outlet port filter 720 restricts passage of water and permits passage of moisture and steam. For example, the outlet port filter 720 is attached to the inverter downstream wall surface 90b to cover the inverter outlet port 114B. The outlet port filter 720 restricts the foreign matter MF from entering the inverter space 94 from the inverter outlet port 114B.

According to the present embodiment described above, the cooling air Fa flows to the inside of the unit housing 101 from the unit inlet port 112 and flows to the outside of the unit housing 101 from the unit outlet port 114. In the configuration, the heat of the motor 61 and the inverter 81 inside the unit housing 101 is directly applied to the cooling air Fa. The heat is released to the outside of the unit housing 101 from the unit outlet port 114 together with the cooling air Fa. Accordingly, the motor 61 and the inverter 81 inside the unit housing 101 can be cooled directly by the cooling air Fa. That is, the motor unit 100 can be internally cooled by the cooling air Fa.

However, when the cooling air Fa flows to the inside of the unit housing 101, the foreign matter MF may enter the inside of the unit housing 101 together with the cooling air Fa. Meanwhile, according to the present embodiment, entry of the foreign matter MF from the unit inlet port 112 is restricted by the labyrinth structure portion 700. Therefore, occurrence of an abnormality of the EPU 50 caused by the foreign matter MF entering the inside of the unit housing 101 can be reduced. For example, adhering of the foreign matter MF to the drive board 510 and occurrence of a short-circuit abnormality in the drive board 510 caused by the foreign matter MF can be reduced.

As described above, in the EPU 50, the occurrence of an abnormality caused by entry of the foreign matter MF to the inside can be reduced while realizing internal cooling by the cooling air Fa.

According to the present embodiment, the unit inlet port 112 and the unit outlet port 114 are provided such that the cooling air Fa flowing into the unit inlet port 112 passes through the motor space 74, then passes through the inverter space 94 and flows out from the unit outlet port 114. In the configuration, the motor 61 is cooled by the cooling air Fa to which the heat of the inverter 81 is not applied. Therefore, the effect of cooling the motor 61 by the cooling air Fa can be enhanced. Accordingly, occurrence of an abnormality in the EPU 50 caused by an excessive increase in the temperature of the motor 61 can be reduced.

According to the present embodiment, the blower fan 121 sends the cooling air Fa such that the cooling air Fa flowing into the unit inlet port 112 flows out from the unit outlet port 114. In the configuration, the cooling air Fa can be forced to flow to the inside of the unit housing 101 by the blower fan 121. Therefore, a decrease in the effect of cooling the motor 61 and the inverter 81 by the cooling air Fa due to insufficient flow velocity or flow rate of the cooling air Fa can be limited.

According to the present embodiment, in the labyrinth structure portion 700, the labyrinth passage 710 restricts entry of the foreign matter MF to the inside of the unit housing 101. In the configuration, when the cooling air Fa flows through the labyrinth passage 710, the foreign matter MF is easily removed from the cooling air Fa. The labyrinth structure portion 700 can appropriately manage the pressure loss when the cooling air Fa flows through the labyrinth passage 710. Therefore, insufficiency of the flow velocity or flow rate of the cooling air Fa due to an excessively large pressure loss in the labyrinth passage 710, and insufficiency of the cooling effect of the cooling air Fa on the EPU 50 can be limited. An excessive flow velocity or flow rate of the cooling air Fa due to an excessively small pressure loss in the labyrinth passage 710 can be prevented, and the occurrence of an abnormality in the motor 61 and the inverter 81 caused by the cooling air Fa can be reduced.

According to the present embodiment, the labyrinth passage inlet port 711 faces the downwind side of the propeller wind. In the configuration, the propeller wind is unlikely to directly flow into the labyrinth passage inlet port 711. Therefore, the foreign matter MF is unlikely to enter the labyrinth passage inlet port 711 together with the propeller wind. Accordingly, the foreign matter MF can be prevented from entering the labyrinth passage 710 due to the direction of the labyrinth passage inlet port 711.

In the present embodiment, the labyrinth structure portion 700 is mounted on the tilt-rotor aircraft. In the configuration, the direction of the labyrinth passage inlet port 711 is changed as the tilt angle of the propeller 20 is changed. By changing the direction of the labyrinth passage inlet port 711, the foreign matter MF inside the labyrinth passage 710 is easily discharged from the labyrinth passage inlet port 711. For example, when the tilt angle of the propeller 20 is changed such that the labyrinth passage inlet port 711 faces downward, the foreign matter MF inside the labyrinth passage 710 falls under the own weight and is discharged from the labyrinth passage inlet port 711.

According to the present embodiment, inside the inverter housing 90, the capacitor units 527, 528, and 580 and the arm switch unit 530 are provided such that the cooling air Fa cools the capacitor units 527, 528, and 580 and then cools the arm switch unit 530. In the configuration, the capacitor units 527,528, and 580 are cooled by the cooling air Fa to which the heat of the arm switch unit 530 is not applied. Therefore, the effect of cooling the capacitor units 527, 528, and 580 by the cooling air Fa can be enhanced. Thus, the heat of the capacitor units 527, 528, and 580 can be sufficiently dissipated by the cooling air Fa without greatly preventing heat dissipation of the arm switch unit 530 having a relatively large heat generation amount.

In the present embodiment, the capacitor units 527, 528, and 580 are provided between the unit connection hole 115 and the arm switch unit 530 in the radial direction RD. In the configuration, in a flow of the cooling air Fa in the inverter space 94, the capacitor units 527, 528, and 580 are located upstream of the arm switch unit 530. Therefore, a configuration in which the cooling air Fa reaches the arm switch unit 530 after cooling the capacitor units 527, 528, and 580 can be implemented.

According to the present embodiment, the capacitor units 527, 528, and 580 are mounted on the drive board 510 on the first drive board surface 510a. In the configuration, the cooling air Fa flowing along the first drive board surface 510a easily hits the capacitor units 527, 528, and 580. Therefore, a configuration in which the capacitor units 527, 528, and 580 are reliably cooled by the cooling air Fa can be implemented. The arm switch unit 530 is provided between the capacitor units 527, 528, and 580 and the inverter inner wall surface 91a. Therefore, the cooling air Fa passing through the capacitor units 527, 528, and 580 easily hits the arm switch unit 530. Therefore, a configuration in which the arm switch unit 530 is reliably cooled by the cooling air Fa can be implemented.

According to the present embodiment, the arm switch unit 530 is provided such that the cooling air Fa flows through the drive gap 94c after cooling the arm switch unit 530. In the configuration, even if the pressure loss in the drive gap 94c increases and the flow velocity or the flow rate of the cooling air Fa in the drive gap 94c decreases, the flow velocity or the flow rate of the cooling air Fa for cooling the arm switch unit 530 is unlikely to be insufficient. Therefore, a decrease in an effect of cooling the arm switch unit 530 by the cooling air Fa due to the drive gap 94c can be limited.

In the present embodiment, the arm switch unit 530 is provided between the unit connection hole 115 and the drive gap 94c in the axial direction AD. In the configuration, in the flow of the cooling air Fa in the inverter space 94, the arm switch unit 530 is located upstream of the drive gap 94c. Therefore, a configuration in which the cooling air Fa passes through the drive gap 94c after cooling the arm switch unit 530 can be implemented.

In the inverter space 94, the first drive space 94a and the second drive space 94b are connected through the drive gap 94c. Therefore, the cooling air Fa cools the capacitor units 527, 528, and 580 and the arm switch unit 530 in the first drive space 94a, and then flows into the second drive space 94b through the drive gap 94c. Therefore, the cooling air Fa cools the arm switch unit 530 before passing through the drive gap 94c. That is, the cooling air Fa that passes through the drive gap 94c without cooling the arm switch unit 530 is unlikely to be generated. Accordingly, the arm switch unit 530 can be cooled by the cooling air Fa as much as possible.

According to the present embodiment, the arm switch unit 530 is provided on the inverter inner wall surface 91a such that the heat of the arm switch unit 530 is transferred to the inverter inner wall surface 91a. In the configuration, the heat of the arm switch unit 530 is easily released to the outside of the unit housing 101 via the inverter outer peripheral wall 91. The arm switch unit 530 can be cooled in external cooling of the motor unit 100 by the propeller wind.

In the present embodiment, multiple arm switch units 530 are arranged in the circumferential direction CD along the inverter inner wall surface 91a. In the configuration, the effect of external cooling can be individually imparted to each of the multiple arm switch units 530. Therefore, even if the number of arm switch units 530 is large, accumulation of the heat of the arm switch units 530 inside the inverter housing 90 can be limited.

Since the arm switch unit 530 is provided on the inverter inner wall surface 91a, a row of the arm switch units 530 is located as close as possible to the inverter inner wall surface 91a. The row of arm switch units 530 is formed by the multiple arm switch units 530, and extends in the circumferential direction CD along the inverter inner wall surface 91a. In the row of arm switch units 530, a circumferential length in the circumferential direction CD increases as the position is closer to the radially outer side. Therefore, in the configuration in which the arm switch units 530 are located as close as possible to the inverter inner wall surface 91a, the number of arm switch units 530 forming the row can be increased as possible. That is, the multiple-parallel number of arm switch units 530 can be increased. The multiple-parallel number is the number of arm switch units 530 connected in parallel to each other in one phase.

In the inverter device 80, an amount of heat generated by the arm switch units 530 is larger than an amount of heat generated by the smoothing capacitor units 580 and an amount of heat generated by the filter components 524. Therefore, the larger the number of arm switch units 530, the more advantageous the cooling of the arm switch units 530. This is because the heat generated in one arm switch unit 530 is more likely to be reduced as the number of arm switch units 530 increases.

According to the present embodiment, the EPU 50 drives the eVTOL 10 to fly. In the configuration, in a state where the eVTOL 10 is flying by the driving of the EPU 50, the occurrence of an abnormality caused by the entry of the foreign matter MF to an inside of the EPU 50 can be reduced while realizing internal cooling of the EPU 50 by the cooling air Fa. Therefore, by reducing the occurrence of an abnormality caused by the heat or the foreign matter MF in the EPU 50, a decrease in safety of the eVTOL 10 can be limited. In an aircraft such as the eVTOL 10, a demand for reducing a concern of malfunction is severe, and a demand for an output density [kg/kw] of the EPU 50 is also severe. Therefore, cooling the inside of the EPU 50 by the cooling air Fa and restricting the foreign matter MF to enter the inside of the EPU 50 are realized, and thus both countermeasures against foreign matter and a weight reduction can be achieved.

### <Second Embodiment>

In the first embodiment, the labyrinth passage inlet port 711 faces the downwind side of the propeller wind. Meanwhile, in a second embodiment, the labyrinth passage inlet port 711 faces the upwind side of the propeller wind. Configurations, operations, and effects not particularly described in the second embodiment are the same as those in the first embodiment described above. In the second embodiment, differences from the first embodiment will be mainly described.

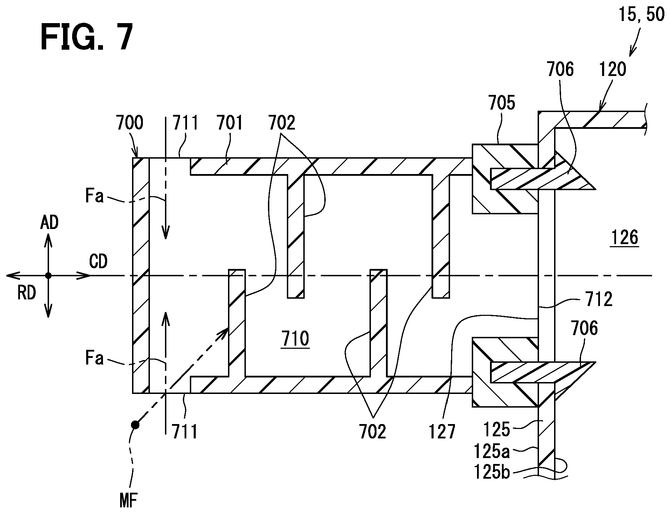

As shown in FIG. 7, the labyrinth structure portion 700 includes multiple labyrinth passage inlet ports 711. The multiple labyrinth passage inlet ports 711 are provided in the outer surface of the labyrinth housing 701. The multiple labyrinth passage inlet ports 711 include a labyrinth passage inlet port 711 facing the downwind side of the propeller wind and a labyrinth passage inlet port 711 facing the upwind side of the propeller wind. The labyrinth passage inlet port 711 facing the upwind side faces the propeller 20 in the axial direction AD. The labyrinth passage inlet port 711 facing the upwind side and the labyrinth passage inlet port 711 facing the downwind side face opposite sides in the axial direction AD.

The multiple labyrinth passage inlet ports 711 include a labyrinth passage inlet port 711 that is opened in the circumferential direction CD. In FIG. 7, the labyrinth passage inlet port 711 opened in the circumferential direction CD is not shown. The labyrinth passage inlet port 711 opened in the circumferential direction CD, the labyrinth passage inlet port 711 facing the upwind side, and the labyrinth passage inlet port 711 facing the downwind side face different directions. The multiple labyrinth passage inlet ports 711 are arranged, for example, in at least one of the axial direction AD and the circumferential direction CD.

In the present embodiment, the labyrinth passage 710 has multiple labyrinth passage inlet ports 711. In the configuration, even if the foreign matter MF enters the labyrinth passage 710 from any one of the multiple labyrinth passage inlet ports 711, the foreign matter MF can be discharged from another labyrinth passage inlet port 711 to the outside. For example, even if the foreign matter MF enters the labyrinth passage 710 from the labyrinth passage inlet port 711 facing the upwind side of the propeller wind, the foreign matter MF is easily discharged to the outside from the labyrinth passage inlet port 711 facing the downwind side. Accordingly, a configuration in which the foreign matter MF is easily discharged from the labyrinth passage 710 to the outside of the labyrinth housing 701 can be implemented.

### <Third Embodiment>

In the first embodiment, the labyrinth structure portion 700 is used as the foreign matter restriction portion. Meanwhile, in a third embodiment, a foreign matter separator is used as the foreign matter restriction portion. Configurations, operations, and effects not particularly described in the third embodiment are the same as those in the first embodiment. In the third embodiment, differences from the first embodiment will be mainly described.

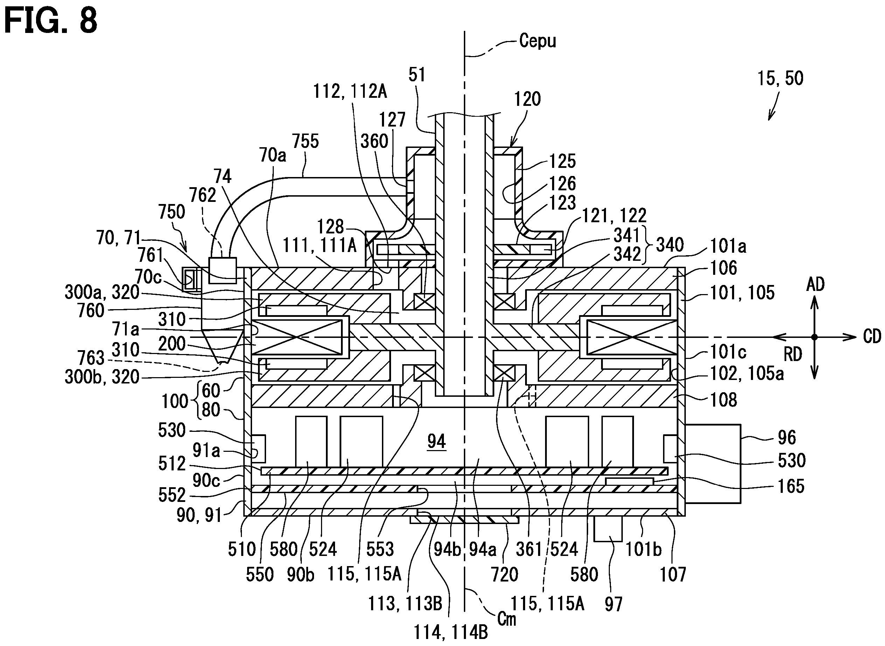

As shown in FIG. 8, the EPU 50 includes a centrifugal separator 750 and a separation connection pipe 755. The centrifugal separator 750 restricts the foreign matter MF from entering the inside of the motor unit 100 from the motor inlet port 112A. The centrifugal separator 750 corresponds to the foreign matter restriction portion. The centrifugal separator 750 is attached to the blower device 120. The centrifugal separator 750 is provided outside the case inlet port 127. The centrifugal separator 750 restricts the entry of the foreign matter MF to the unit space 102 by restricting the entry of the foreign matter MF to the case inlet port 127.

The centrifugal separator 750 is capable of separating the cooling air Fa and the foreign matter MF by a centrifugal force. In the centrifugal separator 750, the foreign matter MF is removed from the cooling air Fa using the centrifugal force. The centrifugal separator 750 corresponds to the foreign matter separator. The separation connection pipe 755 connects the centrifugal separator 750 and the blower device 120. The separation connection pipe 755 is formed by, for example, a flexible piping member. The cooling air Fa from which the foreign matter MF is removed by the centrifugal separator 750 is supplied to the blower device 120 through the separation connection pipe 755.

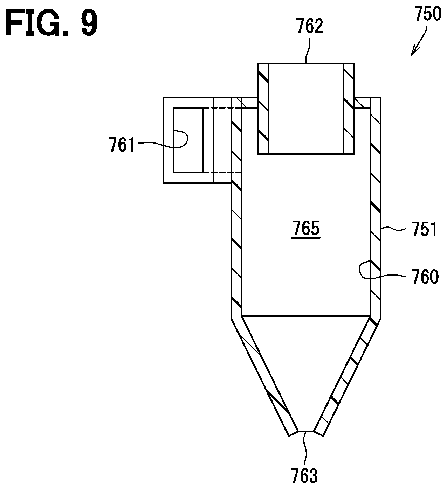

As shown in FIG. 9, the centrifugal separator 750 has a separation passage 760. The separation passage 760 includes a separation inlet port 761, a separation outlet port 762, a foreign matter outlet port 763, and a separation space 765. The separation inlet port 761 is an inlet port through which the cooling air Fa flows into the separation passage 760. The separation outlet port 762 is an outlet port through which the cooling air Fa flows out from the separation passage 760. The foreign matter outlet port 763 is an outlet port for discharging the foreign matter MF separated from the cooling air Fa to the outside of the centrifugal separator 750. The separation space 765 is in communication with the separation inlet port 761, the separation outlet port 762, and the foreign matter outlet port 763. The separation space 765 is a space in which the cooling air Fa and the foreign matter MF can be separated by the centrifugal force.

The cooling air Fa containing the foreign matter MF is separated into the cooling air Fa and the foreign matter MF in the separation space 765 after flowing into the separation passage 760 from the separation inlet port 761. Then, the cooling air Fa flows into the blower device 120 from the separation outlet port 762 through the separation connection pipe 755. Meanwhile, the foreign matter MF is discharged from the foreign matter outlet port 763. The separation connection pipe 755 connects the separation outlet port 762 and the case inlet port 127 such that air can pass therebetween.

The centrifugal separator 750 includes a separation housing 751. The separation housing 751 is made of a resin material or the like. The separation housing 751 forms the separation passage 760. The separation inlet port 761, the separation outlet port 762, and the foreign matter outlet port 763 are provided in an outer surface of the separation housing 751. The separation housing 751 is fixed to the unit housing 101 by a fixture such as a bolt. The separation housing 751 is provided, for example, on the radially outer side with respect to the unit housing 101, and is fixed to the unit outer peripheral wall surface 101c.

In the centrifugal separator 750, the separation inlet port 761, the separation outlet port 762, and the foreign matter outlet port 763 are opened in different directions. The foreign matter outlet port 763 is opened toward the downwind side of the propeller wind. Therefore, the foreign matter MF discharged from the foreign matter outlet port 763 is less likely to be pushed back to the separation passage 760 by the propeller wind. The separation inlet port 761 is opened in the circumferential direction CD, for example. The separation outlet port 762 is opened in the axial direction AD, for example.

According to the present embodiment, the centrifugal separator 750 separates the cooling air Fa and the foreign matter MF by the centrifugal force, thereby restricting entry of the foreign matter MF to the inside of the unit housing 101. In the configuration, the cooling air Fa containing the foreign matter MF is separated into the cooling air Fa and the foreign matter MF when flowing through an inside of the centrifugal separator 750. By using the centrifugal force in the centrifugal separator 750 as described above, the foreign matter MF is easily removed from the cooling air Fa, for example, as compared with the labyrinth structure portion 700 of the first embodiment.

In the centrifugal separator 750, as long as the centrifugal force is generated in the separation space 765, the separation passage 760 does not need to be elongated. Therefore, the insufficiency of the flow velocity or flow rate of the cooling air Fa due to an excessively large pressure loss in the separation passage 760, and the insufficiency of the cooling effect of the cooling air Fa on the EPU 50 can be limited. Accordingly, for example, a low pressure loss can be realized as compared with the labyrinth structure portion 700 of the first embodiment.

According to the present embodiment, the foreign matter outlet port 763 faces the downwind side of the propeller wind. In the configuration, the propeller wind is less likely to directly flow into the foreign matter outlet port 763. Therefore, the foreign matter MF can be prevented from entering the foreign matter outlet port 763 together with the propeller wind, and the foreign matter MF to be discharged from the foreign matter outlet port 763 can be prevented from being pushed back to the separation space 765 by the propeller wind. Accordingly, a configuration in which the foreign matter MF is reliably discharged from the foreign matter outlet port 763 in the centrifugal separator 750 can be implemented. Since the foreign matter MF is less likely to be blown off by the propeller wind and reach the EPU 50, adhering of the foreign matter MF to the outer surface of the EPU 50 can be limited.

### <Fourth Embodiment>

In the third embodiment, the foreign matter outlet port 763 faces the downwind side of the propeller wind. Meanwhile, in a fourth embodiment, the foreign matter outlet port 763 faces a direction intersecting the propeller wind. Configurations, operations, and effects not particularly described in the fourth embodiment are the same as those of the third embodiment. In the fourth embodiment, differences from the third embodiment will be mainly described.

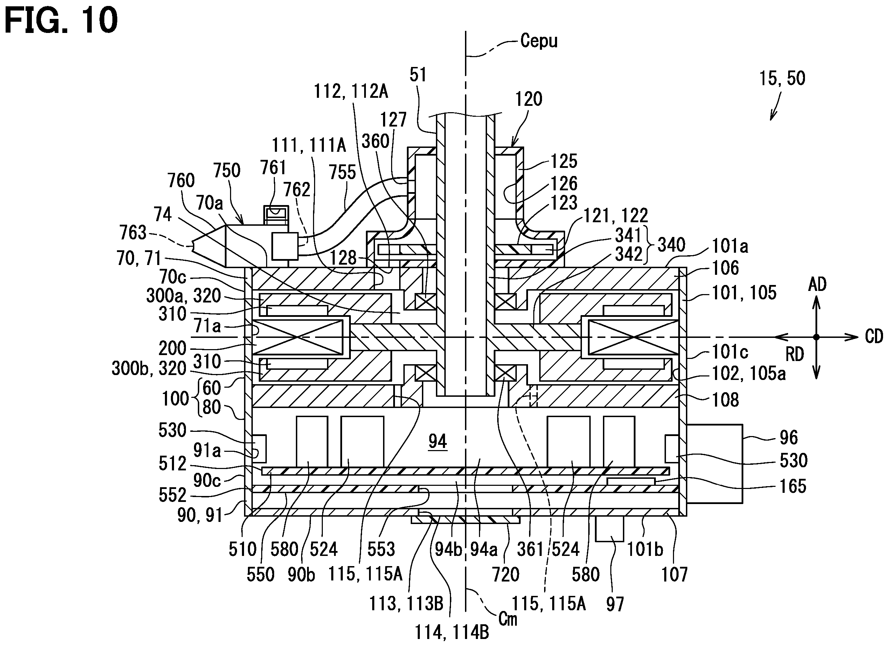

As shown in FIG. 10, the centrifugal separator 750 is provided such that the foreign matter outlet port 763 is opened in the radial direction RD. The foreign matter outlet port 763 is opened in a direction orthogonal to the propeller wind. For example, the foreign matter outlet port 763 faces the radially outer side. In the centrifugal separator 750, the separation inlet port 761 is opened in the circumferential direction CD. The separation outlet port 762 faces the radially inner side. In the centrifugal separator 750, the separation housing 751 is arranged on the unit housing 101 in the axial direction AD. For example, the separation housing 751 is provided on the windward side of the propeller wind with respect to the unit housing 101, and is fixed to the unit upstream wall surface 101a.

According to the present embodiment, the foreign matter outlet port 763 is opened in the direction orthogonal to the propeller wind. In the configuration, a foreign matter discharge direction and a flight direction are orthogonal to each other. The foreign matter discharge direction is a direction in which the foreign matter MF is discharged from the foreign matter outlet port 763, and is, for example, the radial direction RD. The flight direction is a direction in which the eVTOL 10 travels, and is likely to coincide with the direction in which the propeller wind flows. In this way, when the foreign matter discharge direction and the flight direction are orthogonal to each other, the foreign matter MF is less likely to be blown off by a flight wind and reach the EPU 50. Accordingly, limitation on adhering of the foreign matter to the EPU 50 can be improved. The direction in which the propeller wind flows easily coincides with a direction in which the flight wind generated as the eVTOL 10 flies flows.

### <Fifth Embodiment>

In the first embodiment, the labyrinth structure portion 700 is used as the foreign matter restriction portion, and in the second embodiment, the centrifugal separator 750 is used as the foreign matter restriction portion. Meanwhile, in a fifth embodiment, a filtration filter is used as the foreign matter restriction portion. Configurations, operations, and effects not particularly described in the fifth embodiment are the same as those of the first embodiment. In the fifth embodiment, differences from the first embodiment will be mainly described.

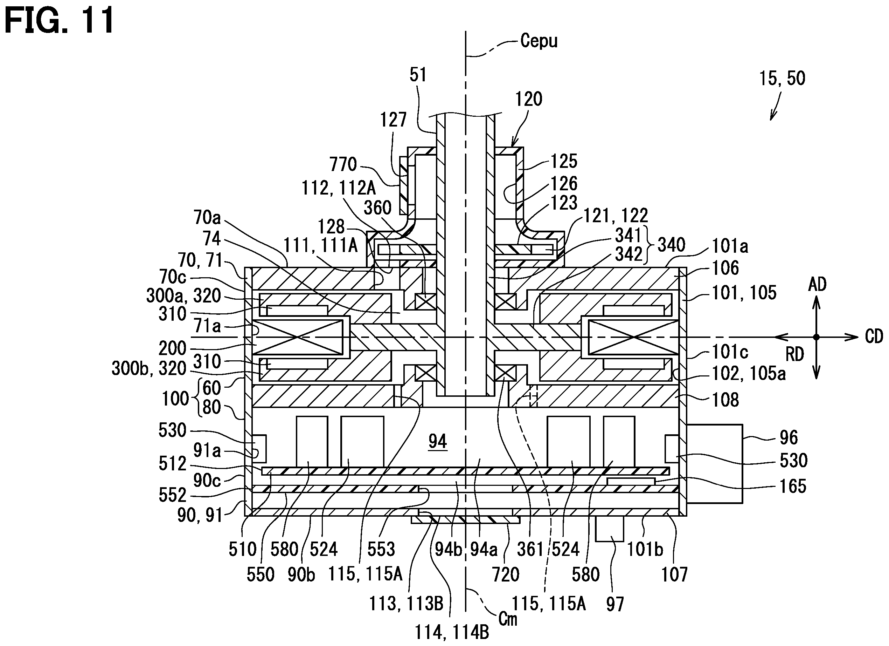

As shown in FIG. 11, the EPU 50 includes a filter sheet 770. The filter sheet 770 restricts the foreign matter MF from entering the inside of the motor unit 100 from the motor inlet port 112A. The filter sheet 770 corresponds to the foreign matter restriction portion. The filter sheet 770 is attached to the blower device 120. The filter sheet 770 restricts entry of the foreign matter MF to the unit space 102 by restricting entry of the foreign matter MF to the case inlet port 127.

The filter sheet 770 filters the cooling air Fa to remove foreign matter MF from the cooling air Fa. The filter sheet 770 is a sheet-shaped filter member. The filter sheet 770 may be a filter member including a nonwoven fabric. The filter sheet 770 corresponds to the filtration filter. The filter sheet 770 covers the case inlet port 127 from the outside. The filter sheet 770 is fixed to the case outer surface 125a by an adhesive or the like.

The filter sheet 770 is a waterproof and moisture-permeable sheet. The filter sheet 770 is waterproof and moisture-permeable. The filter sheet 770 allows passage of moisture and steam together with the cooling air Fa, and restricts passage of water as the foreign matter MF. The filter sheet 770 has a pair of sheet surfaces. One of the sheet surfaces is an attachment surface attached to the case outer surface 125a. The other sheet surface is an exposed surface exposed to a side opposite to the case outer surface 125a. In the filter sheet 770, multiple layers are laminated.

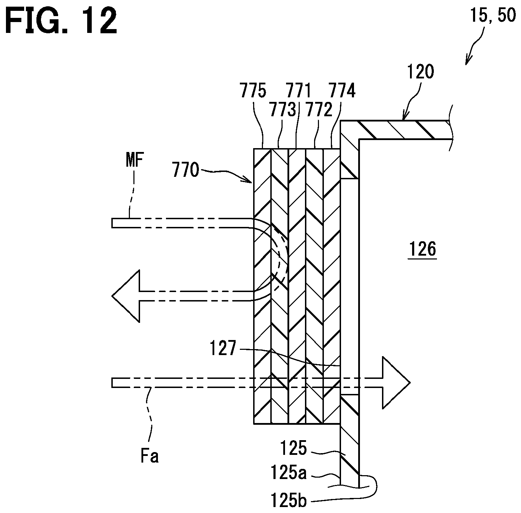

As shown in FIG. 12, the filter sheet 770 includes a filter layer 771, an inner protective layer 772, an outer protective layer 773, a flexible layer 774, and an outer layer 775. These layers 771 to 775 are laminated to form the filter sheet 770. Each of the layers 771 to 775 is made of a resin material or the like into a sheet shape.

The filter layer 771 is waterproof and moisture-permeable. The filter layer 771 allows passage of moisture and steam together with the cooling air Fa, and restricts passage of water as the foreign matter MF. The filter layer 771 is a porous membrane. The flexible layer 774 is flexible and forms the attachment surface of the filter sheet 770. The outer layer 775 has wear resistance and forms the exposed surface of the filter sheet 770. The inner protective layer 772 is provided between the filter layer 771 and the flexible layer 774, and protects the filter layer 771 from the inside. The outer protective layer 773 is provided between the filter layer 771 and the outer layer 775, and protects the filter layer 771 from the outside.

According to the present embodiment, the filter sheet 770 filters the cooling air Fa to restrict entry of the foreign matter MF to the inside of the unit housing 101. In the configuration, the foreign matter MF is removed from the cooling air Fa when the cooling air Fa passes through the filter sheet 770. In the filter sheet 770, there is no need to form the labyrinth passage 710 as in the first embodiment or the separation passage 760 as in the third embodiment. Therefore, by using the filter sheet 770 as the foreign matter restriction portion, a reduction in weight and size of the foreign matter restriction portion can be realized. The filter sheet 770 easily removes the foreign matter MF from the cooling air Fa by filtering the cooling air Fa. Accordingly, by using the filter sheet 770 as the foreign matter restriction portion, reliability of the foreign matter removal can be improved.

In the present embodiment, the filtration filter such as the filter sheet 770 may not have a sheet shape. For example, the filtration filter may have a columnar shape or a rectangular parallelepiped shape as long as having a filter function. The filtration filter may enter the unit inlet port 112. For example, the filtration filter may be embedded in the unit inlet hole 111 so as to close the unit inlet port 112.

### <Sixth Embodiment>

In the first embodiment, the unit connection hole 115 is provided in the partition plate 108 as the plate connection hole 115A. Meanwhile, in a sixth embodiment, the unit connection hole 115 is provided in the motor shaft 340. Configurations, operations, and effects not particularly described in the sixth embodiment are the same as those in the first embodiment. In the sixth embodiment, differences from the first embodiment will be mainly described.

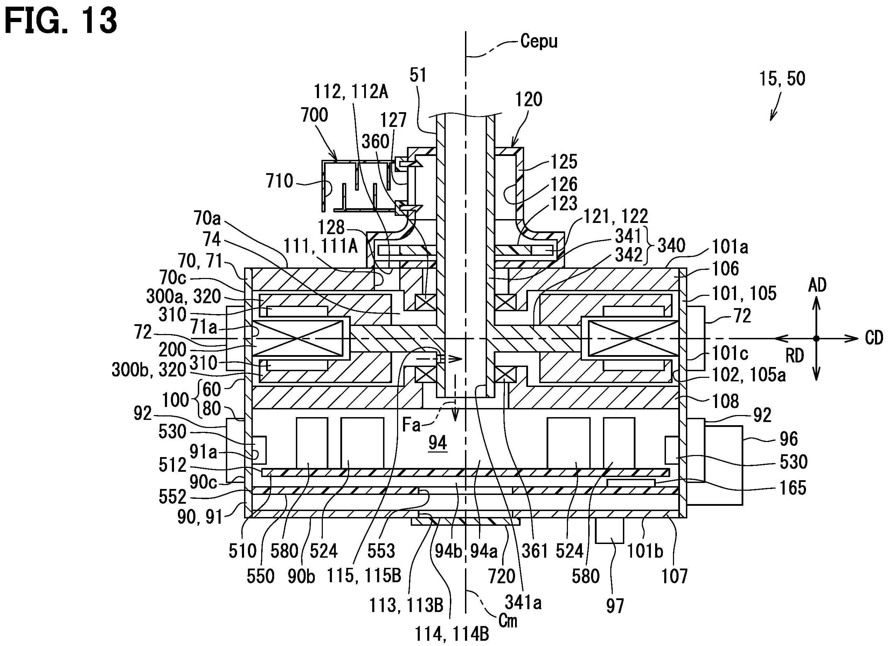

As shown in FIG. 13, the shaft main body 341 has a shaft space 341a. The shaft space 341a is an internal space of the shaft main body 341. The shaft space 341a is in communication with the inverter space 94. The shaft main body 341 penetrates the partition plate 108 in the axial direction AD. The shaft space 341a is located on the radially inner side with respect to the motor space 74. The shaft main body 341 partitions the shaft space 341a from the motor space 74.

The motor unit 100 has shaft connection holes 115B as the unit connection hole 115. Each of the shaft connection holes 115B is provided in the shaft main body 341. The shaft connection hole 115B penetrates the shaft main body 341 in the radial direction RD. The shaft connection hole 115B is in communication with the shaft space 341a. The shaft connection hole 115B connects the motor space 74 and the inverter space 94 via the shaft space 341a such that air can pass therebetween. The shaft connection hole 115B is provided between the shaft flange 342 and the partition plate 108 in the axial direction AD. The shaft connection hole 115B is located at a position in communication with the second outer gap 452. Multiple shaft connection holes 115B are arranged in the circumferential direction CD.

The cooling air Fa flows from the motor space 74 into the shaft space 341a through the shaft connection hole 115B. Then, the cooling air Fa flows from the shaft space 341a into the inverter space 94 along the motor axis Cm. Therefore, a center portion of the inverter space 94 in the radial direction RD is easily cooled by the cooling air Fa.

The motor unit 100 includes motor fins 72 and inverter fins 92. The motor fins 72 and the inverter fins 92 are provided on the unit outer peripheral wall surface 101c. The motor fins 72 and the inverter fins 92 are heat dissipation fins that radiate heat of the motor unit 100 to the outside. The motor fins 72 and the inverter fins 92 cool the motor unit 100 by heat dissipation. The motor fins 72 and the inverter fins 92 can enhance the effect of cooling the motor unit 100 by the propeller wind. Multiple motor fins 72 and multiple inverter fins 92 are arranged in the circumferential direction CD.

The motor fins 72 are provided on the motor housing 70. The motor fins 72 are provided on the motor outer peripheral wall surface 70c. Each of the motor fins 72 extends from the motor outer peripheral wall 71 toward the radially outer side. The motor fins 72 are provided at positions aligned with the stator 200 in the radial direction RD. Heat of the stator 200 is easily transferred to the motor fins 72 via the motor outer peripheral wall 71.

The inverter fins 92 are provided on the inverter housing 90. The inverter fins 92 are provided on the inverter outer peripheral wall surface 90c. Each of the inverter fins 92 extends from the inverter outer peripheral wall 91 toward the radially outer side. The inverter fin 92 is provided at a position aligned with the arm switch unit 530 in the radial direction RD. The heat of the arm switch unit 530 is easily transferred to the inverter fin 92 via the inverter outer peripheral wall 91.

The shaft connection hole 115B may connect the motor space 74 and the inverter space 94 such that air can pass therebetween without passing through the shaft space 341a. For example, in a configuration in which the shaft main body 341 is implemented by a solid columnar member, the shaft connection hole 115B preferably extends in at least one of the axial direction AD and the radial direction RD in order to connect the motor space 74 and the inverter space 94.

The EPU 50 may include a fin cover. The fin cover covers at least one of the motor fin 72 and the inverter fin 92 from the radially outer side. The fin cover is a cover member that covers the heat dissipation fins from the radially outer side. In the EPU 50, a cover flow path is provided between the unit outer peripheral wall 105 and the fin cover. In the cover flow path, the propeller wind flows in the axial direction AD along the unit outer peripheral wall surface 101c. At least one of the motor fins 72 and the inverter fins 92 is accommodated in the cover flow path. In the cover flow path, heat is released to the propeller wind from the motor fins 72 and the inverter fins 92.

The EPU 50 may include a fin-fan. The fin-fan is a fan for cooling at least one of the motor fins 72 and the inverter fins 92. The fin-fan blows air in the same direction as the propeller wind. The fin-fan is provided at least upstream or downstream of the motor fins 72 and the inverter fins 92. Wind generated by air blowing of the fin-fan promotes heat dissipation from at least one of the motor fins 72 and the inverter fins 92.

### <Seventh Embodiment>

In the first embodiment, the unit outlet port 114 is provided in the inverter housing 90 as the inverter outlet port 114B. Meanwhile, in a seventh embodiment, the unit outlet port 114 is provided in the motor housing 70. Configurations, operations, and effects not particularly described in the seventh embodiment are the same as those in the first embodiment described above. In the seventh embodiment, differences from the first embodiment will be mainly described.

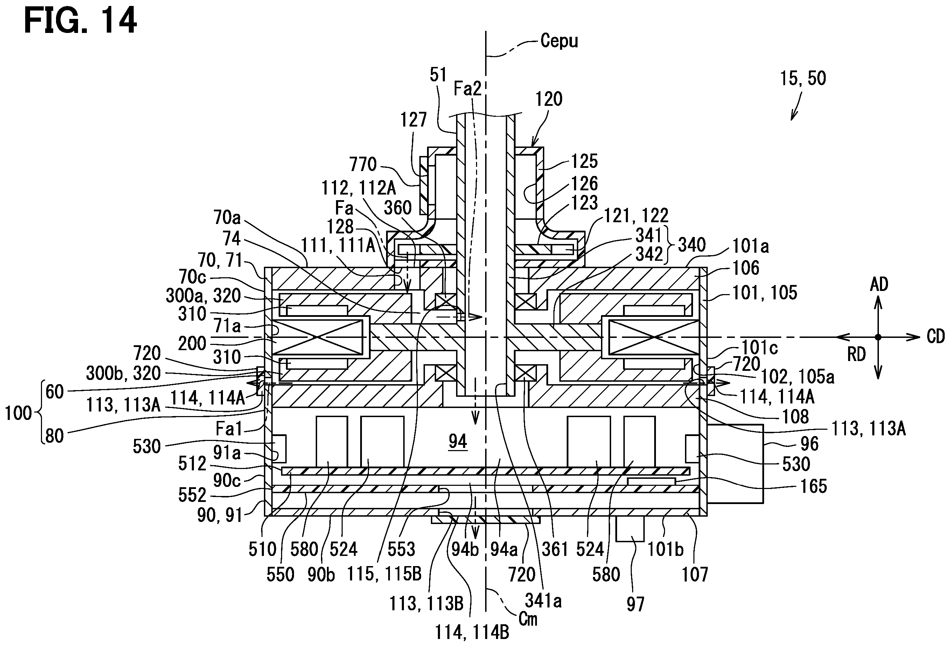

As shown in FIG. 14, the motor unit 100 includes motor outlet holes 113A and motor outlet ports 114A as the unit outlet hole 113 and the unit outlet port 114. Each of the motor outlet ports 114A is an outlet port through which the cooling air Fa flows out from the motor space 74 to the outside of the motor unit 100. The motor outlet port 114A is provided in the outer surface of the motor housing 70. For example, the motor outlet port 114A is provided in the motor outer peripheral wall surface 70c. Multiple motor outlet ports 114A are arranged in the circumferential direction CD. The motor outlet port 114A corresponds to the housing outlet port.

Each of the motor outlet holes 113A is provided in the motor housing 70. The motor outlet hole 113A is in communication with the motor space 74. For example, the motor outlet hole 113A penetrates the motor outer peripheral wall 71 in the radial direction RD. The motor outlet hole 113A is provided between the partition plate 108 and the stator 200 in the axial direction AD. The motor outlet hole 113A is located at a position in communication with the motor gap 450. For example, the motor outlet hole 113A is in communication with the second outer gap 452. Multiple motor outlet holes 113A are arranged in the circumferential direction CD.

The outlet port filter 720 is attached to the motor outer peripheral wall surface 70c to cover the motor outlet port 114A. The outlet port filter 720 restricts the foreign matter MF from entering the motor space 74 from the motor outlet port 114A. In the present embodiment, as in the fifth embodiment, the entry of the foreign matter MF from the motor inlet port 112A to the motor space 74 is restricted by the filter sheet 770.

In the present embodiment, as in the sixth embodiment, the shaft connection hole 115B is provided in the motor shaft 340. Unlike the sixth embodiment, the shaft connection hole 115B is provided at a position in communication with the first outer gap 451. The shaft connection hole 115B is located between the shaft flange 342 and the upstream plate 106 in the axial direction AD.

After flowing into the motor space 74 from the motor inlet port 112A, the cooling air Fa is branched into motor air Fa1 and inverter air Fa2 at least. That is, the cooling air Fa includes the motor air Fa1 and the inverter air Fa2.

The motor air Fa1 cools the motor 61 in the motor space 74. For example, the motor air Fa1 flows into the motor gap 450 in the motor space 74 and flows through the second outer gap 452 to cool the stator 200. After cooling the stator 200, the motor air Fa1 flows out from the motor outlet port 114A without flowing into the inverter space 94. Therefore, heat applied to the motor air Fa1 from the stator 200 is prevented from flowing into the inverter space 94 together with the motor air Fa1. In the motor device 60, the motor coil of the stator 200 is most likely to generate heat. Therefore, when the heat is applied to the motor air Fa1 from the motor coil, a temperature of the motor air Fa1 is likely to rise, and a cooling performance of the motor air Fa1 is likely to decrease.

The inverter air Fa2 cools the inverter 81 in the inverter space 94 without cooling the stator 200 in the motor space 74. For example, the inverter air Fa2 flows into the inverter space 94 through the shaft connection hole 115B and the shaft space 341a in the motor space 74. The inverter air Fa2 can flow into the inverter space 94 without passing through the motor gap 450. As described in the first embodiment, the inverter air Fa2 cools the arm switch unit 530 and the like in the inverter space 94.

In the motor unit 100, a flow rate of the motor air Fa1 tends to be larger than a flow rate of the inverter air Fa2. A cross-sectional area of the motor gap 450 and a cross-sectional area of the shaft connection hole 115B are set such that the flow rate of the motor air Fa1 is larger than the flow rate of the inverter air Fa2. For example, a cross-sectional area of a narrowest portion in the motor gap 450 is larger than the cross-sectional area of the shaft connection hole 115B. When the flow rate of the motor air Fa1 is larger than the flow rate of the inverter air Fa2, an effect of cooling the stator 200 by the motor air Fa1 can be increased as much as possible. In this way, cooling the motor 61 with the cooling air Fa in preference to cooling the inverter 81 is effective in cooling the motor unit 100 in which a heat generation amount of the motor coil is larger than the heat generation amount of the arm switch unit 530.

### <Eighth Embodiment>

In the first embodiment, the motor inlet port 112A is provided at a position away from the stator 200 toward the radially inner side. Meanwhile, in an eighth embodiment, the motor inlet port 112A is provided at a position aligned with the stator 200 in the axial direction AD. Configurations, operations, and effects not particularly described in the eighth embodiment are the same as those in the first embodiment described above. In the eighth embodiment, differences from the first embodiment will be mainly described.

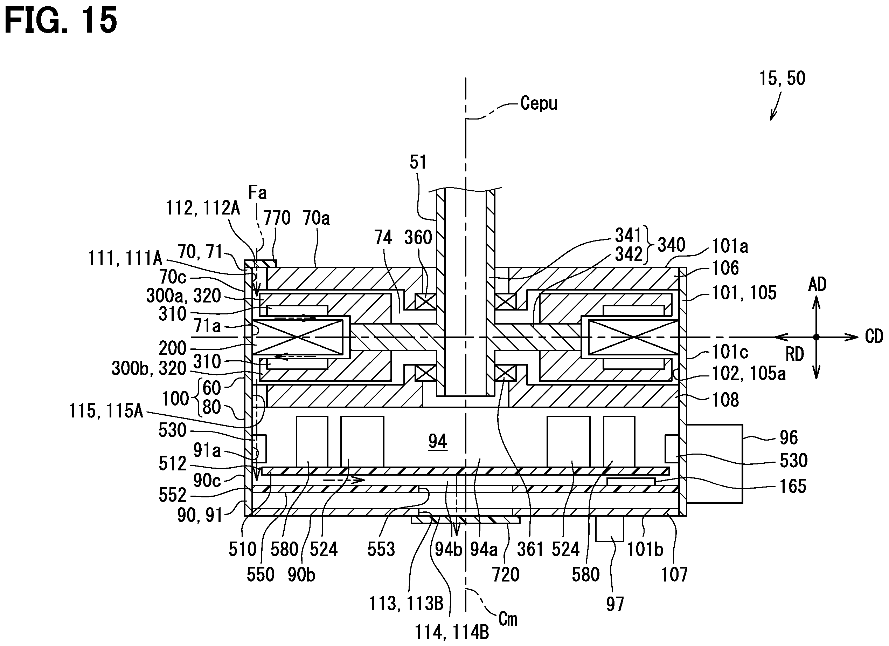

As shown in FIG. 15, the EPU 50 does not include the blower device 120. In the present embodiment, the propeller wind flows into the motor space 74 from the motor inlet port 112A as the cooling air Fa. The motor inlet port 112A faces the upwind side of the propeller wind in the motor upstream wall surface 70a. The EPU 50 includes the filter sheet 770 as in the fifth embodiment. The filter sheet 770 covers the motor inlet port 112A from the outside. The filter sheet 770 is fixed to the motor upstream wall surface 70a by an adhesive or the like. The filter sheet 770 is provided directly on the motor inlet port 112A, thereby restricting the entry of the foreign matter MF to the motor inlet port 112A. Multiple motor inlet ports 112A and multiple filter sheets 770 are arranged in the circumferential direction CD.

Unlike the first embodiment, the motor inlet port 112A is provided at a position outward of the shaft main body 341 and closer to the motor outer peripheral wall 71 in the radial direction RD. The motor inlet port 112A is located at a position facing the stator 200 with the first rotor 300a interposed therebetween. The motor inlet port 112A and the stator 200 are arranged in the axial direction AD with the first rotor 300a interposed therebetween. The motor inlet port 112A is provided at a position in communication with the first outer gap 451. For example, the motor inlet port 112A is located at a position aligned in the axial direction AD with a gap between the first rotor 300a and the motor outer peripheral wall 71.

Unlike the first embodiment, the plate connection hole 115A is provided at a position outward of the shaft main body 341 and closer to the unit outer peripheral wall 105 in the radial direction RD. The plate connection hole 115A is located at a position facing the stator 200 with the second rotor 300b interposed therebetween. The plate connection hole 115A and the stator 200 are arranged in the axial direction AD with the second rotor 300b interposed therebetween. The plate connection hole 115A is provided at a position in communication with the second outer gap 452. For example, the plate connection hole 115A is located at a position aligned in the axial direction AD with a gap between the second rotor 300b and the motor outer peripheral wall 71.

The plate connection hole 115A is located at a position on the radially outer side with respect to the filter component 524. For example, the plate connection hole 115A is located on the radially outer side with respect to the smoothing capacitor unit 580. The plate connection hole 115A is located at a position aligned with the arm switch unit 530 in the axial direction AD. The plate connection hole 115A is aligned with the motor inlet port 112A in the axial direction AD with the stator 200 interposed therebetween.

The cooling air Fa flowing into the motor inlet port 112A passes through the motor inlet hole 111A in the axial direction AD and advances in the axial direction AD, thereby reaching the stator 200. Therefore, the cooling air Fa can cool the stator 200 in the inner gap 453 in a state where heat of other portions of the motor device 60 is not applied to the cooling air Fa. After flowing out from the inner gap 453, the cooling air Fa passes through the plate connection hole 115A in the axial direction AD and advances in the axial direction AD, thereby reaching the arm switch unit 530. Therefore, the cooling air Fa can cool the arm switch unit 530 in a state where heat of other portions of the inverter device 80 is not applied to the cooling air Fa.

### <Ninth Embodiment>

In the first embodiment, the labyrinth structure portion 700 serving as the foreign matter restriction portion is provided on an upstream side of the blower fan 121. Meanwhile, in a ninth embodiment, the foreign matter restriction portion is provided on a downstream side of the blower fan 121. Configurations, operations, and effects not particularly described in the ninth embodiment are the same as those of the first embodiment. In the ninth embodiment, differences from the first embodiment will be mainly described.

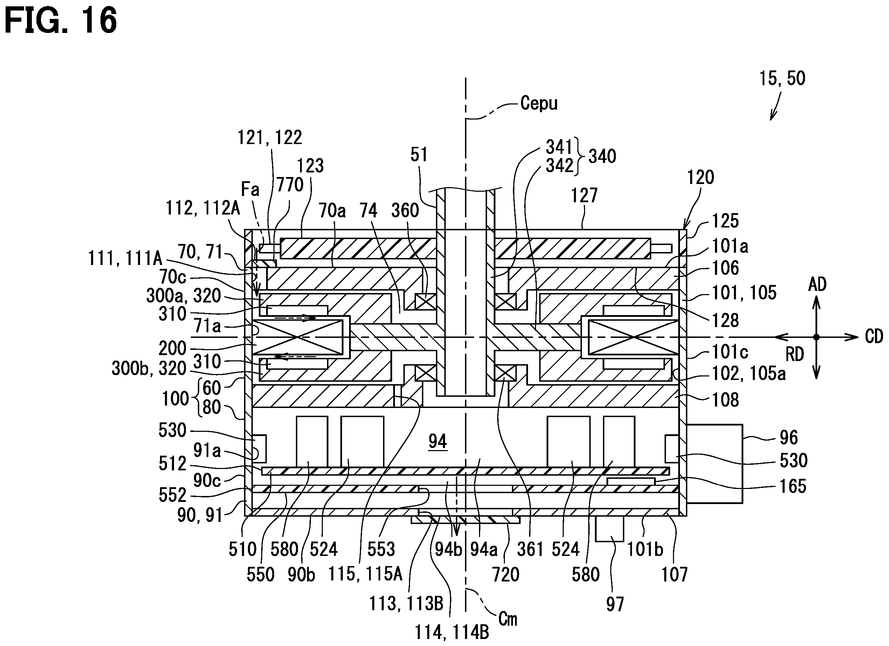

As shown in FIG. 16, the EPU 50 includes the filter sheet 770 as the foreign matter restriction portion, as in the fifth embodiment. The filter sheet 770 is provided between the blower fan 121 and the motor inlet port 112A in the axial direction AD. As in the eighth embodiment, the filter sheet 770 covers the motor inlet port 112A from the outside.

The blower case 125 of the present embodiment is formed in a tubular shape and extends in the axial direction AD. In the blower case 125, the case inlet port 127 and the case outlet port 128 are arranged in the axial direction AD. The case inlet port 127 faces an upstream side of the propeller wind. The case outlet port 128 faces a downstream side of the propeller wind. The motor inlet port 112A is aligned with the case inlet port 127 and the case outlet port 128 in the axial direction AD.

In the blower fan 121, the blower boss 123 is longer than the blower blade 122 in the radial direction RD. The blower blade 122 is provided at a position aligned with the motor inlet port 112A in the axial direction AD. The blower boss 123 is provided at a position away from the motor inlet port 112A toward the radially inner side. The cooling air Fa flows in the axial direction AD so as to flow into the motor inlet port 112A as the blower fan 121 rotates. When the propeller wind reaches the blower fan 121, the blower fan 121 can cause the propeller wind to flow into the motor inlet port 112A as the cooling air Fa.

### <Tenth Embodiment>

In the first embodiment, the blower fan 121 is configured as the cooling air fan to cause the cooling air Fa to flow. Meanwhile, in a tenth embodiment, the rotors 300a, 300b are configured as the cooling air fan to cause the cooling air Fa to flow. Configurations, operations, and effects not particularly described in the tenth embodiment are the same as those in the first embodiment. In the tenth embodiment, differences from the first embodiment will be mainly described.

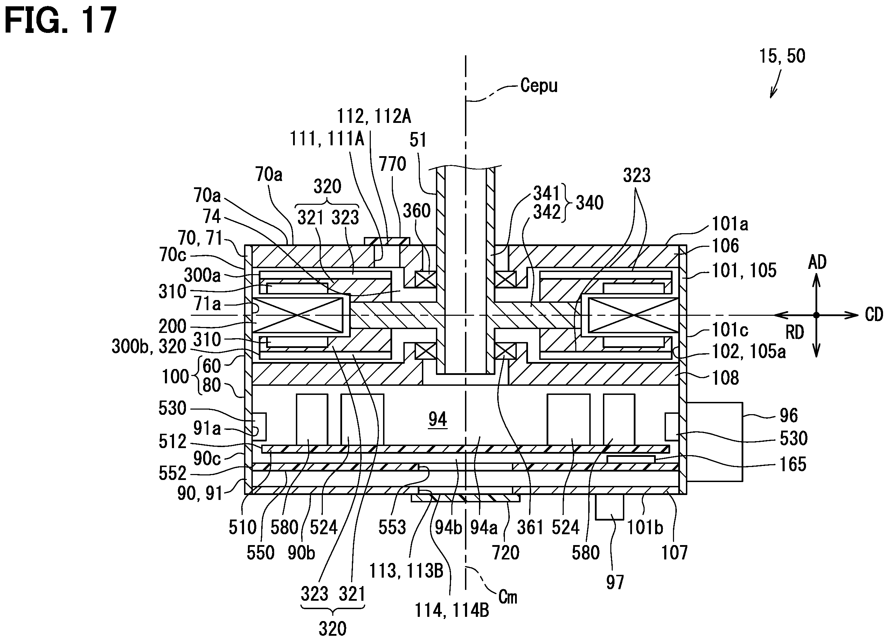

As shown in FIG. 17, the rotors 300a, 300b each include a holder main body 321 and holder ribs 323. The holder main body 321 and the holder ribs 323 are included in the magnet holder 320. The holder main body 321 and the holder rib 323 each are made of a metal material or the like. The holder main body 321 extends in a plate shape in a direction orthogonal to the axial direction AD. The holder main body 321 extends in an annular shape in the circumferential direction CD. The holder main body 321 supports the magnets 310. The magnet 310 enters the holder main body 321 from a stator 200 side.

Each of the holder ribs 323 protrudes from the holder main body 321 toward a side opposite to the stator 200. The holder rib 323 extends in an elongated shape in the radial direction RD along the holder main body 321. Multiple holder ribs 323 are arranged in the circumferential direction CD. At least a part of the holder ribs 323 are provided at positions aligned with the magnets 310 in the axial direction AD.

The rotors 300a, 300b allow the cooling air Fa to flow therethrough. Each of the rotors 300a, 300b corresponds to the cooling air fan. When the rotors 300a, 300b rotate, the holder ribs 323 move in the circumferential direction CD, and thus the cooling air Fa flows. In each of the rotors 300a, 300b, the holder ribs 323 function as blades of the cooling air fan. Each of the rotors 300a, 300b as the cooling air fan is accommodated in the motor housing 70. That is, the cooling air fan is accommodated in the unit housing 101.

When the rotors 300a, 300b rotate, as in the first embodiment, the cooling air Fa flows into the motor space 74 from the motor inlet port 112A, passes through the inverter space 94, and flows out from the inverter outlet port 114B. The holder ribs 323 are shaped such that the cooling air Fa easily flows as the rotors 300a, 300b rotate. For example, the holder rib 323 is curved such that a central portion of the holder rib 323 bulges toward one side in the circumferential direction CD. Since the holder rib 323 is curved in this way, the flow velocity or the flow rate of the cooling air Fa tends to increase.

In the present embodiment, only one of the rotors 300a, 300b may include the holder ribs 323. In the motor 61, as long as at least one of the rotors 300a, 300b includes the holder ribs 323, the cooling air Fa flows as the rotors 300a, 300b rotate.

### <Eleventh Embodiment>

In the first embodiment, the outlet port filter 720 is provided on the unit outlet port 114. Meanwhile, in an eleventh embodiment, a valve body is provided in the unit outlet port 114. Configurations, operations, and effects not particularly described in the eleventh embodiment are the same as those in the first embodiment described above. In the eleventh embodiment, differences from the first embodiment will be mainly described.

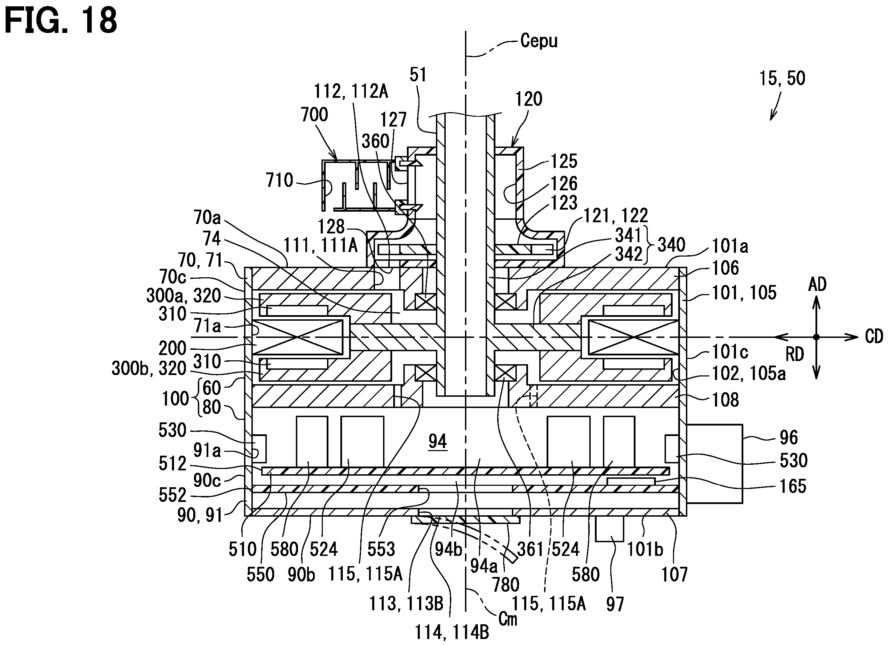

As shown in FIG. 18, the EPU 50 includes a check valve 780. The check valve 780 is provided to cover the unit outlet port 114 from the outside. The check valve 780 is a valve body that opens and closes the unit outlet port 114. The check valve 780 overlaps the unit downstream wall surface 101b. A part of the check valve 780 is fixed to the unit downstream wall surface 101b by an adhesive or the like. The check valve 780 is made of rubber or the like and is elastically deformable.

The check valve 780 can be shifted between a valve closed state and a valve open state by being elastically deformed. The check valve 780 closes the unit outlet port 114 in the valve closed state. When the check valve 780 is in the valve closed state, the entry of the foreign matter MF to the unit space 102 from the unit outlet port 114 is restricted by the check valve 780. The check valve 780 opens the unit outlet port 114 in the valve open state. When the check valve 780 is in the valve open state, the cooling air Fa flows out from the unit outlet port 114. The check valve 780 is elastically deformed by a wind pressure of the cooling air Fa and is shifted from the valve closed state to the valve open state.

### <Twelfth Embodiment>

In the first embodiment, the smoothing capacitor unit 580 is provided on the drive board 510, and the microcomputer 165 is provided on the control board 550. Meanwhile, in a twelfth embodiment, both the smoothing capacitor unit 580 and the microcomputer 165 are provided on one circuit board. Configurations, operations, and effects not particularly described in the twelfth embodiment are the same as those in the first embodiment. In the twelfth embodiment, differences from the first embodiment will be mainly described.

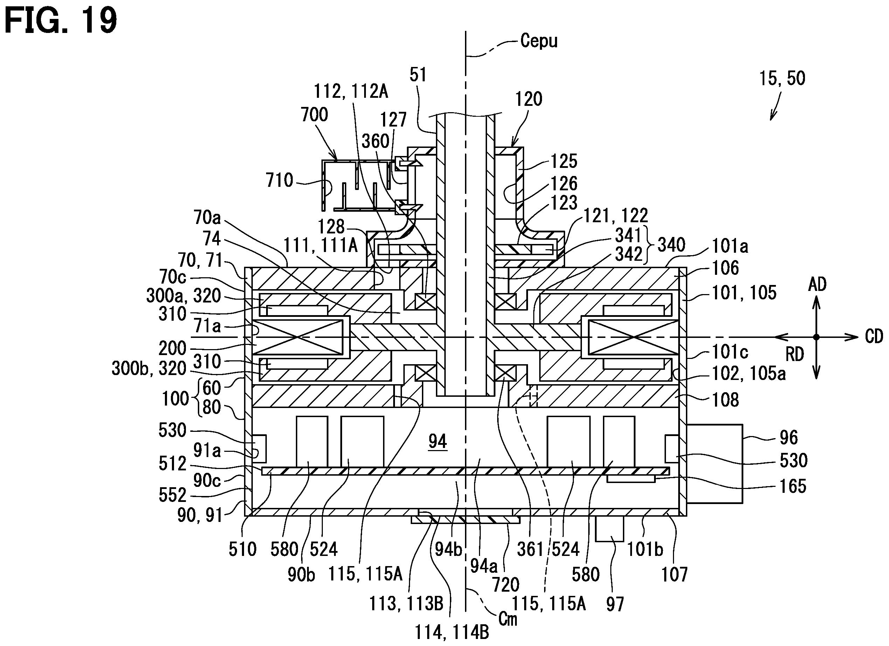

As shown in FIG. 19, in the motor unit 100, both the smoothing capacitor unit 580 and the microcomputer 165 are provided on the drive board 510. In the drive board 510, the smoothing capacitor unit 580 is mounted on the first drive board surface 510a. The microcomputer 165 is mounted on the second drive board surface 510b. As in the first embodiment, the filter component 524 is mounted on the first drive board surface 510a in addition to the smoothing capacitor unit 580. The motor unit 100 includes the drive board 510, but does not include the control board 550.

The microcomputer 165 may be provided on the same surface of the drive board 510 as the smoothing capacitor unit 580. For example, both the microcomputer 165 and the smoothing capacitor unit 580 may be mounted on the first drive board surface 510a. The smoothing capacitor unit 580 and the microcomputer 165 may be provided on the control board 550 as the one circuit board.

### <Thirteenth Embodiment>

In the first embodiment, the cooling air Fa is configured to pass through the motor space 74, then pass through the inverter space 94 and flow out from the unit outlet port 114. Meanwhile, in a thirteenth embodiment, the cooling air Fa is configured to pass through only one of the motor space 74 and the inverter space 94 and flow out from the unit outlet port 114. Configurations, operations, and effects not particularly described in the thirteenth embodiment are the same as those of the first embodiment. In the thirteenth embodiment, differences from the first embodiment will be mainly described.

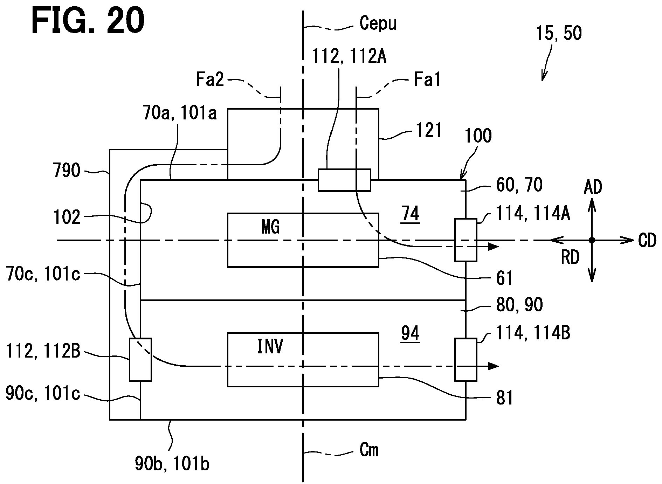

As shown in FIG. 20, in the motor unit 100, the motor space 74 and the inverter space 94 are spaces independent of each other. In the unit space 102, the motor space 74 and the inverter space 94 are not connected to each other. In the motor unit 100, air does not directly pass between the motor space 74 and the inverter space 94. For example, the motor unit 100 does not include the unit connection hole 115.

In the motor unit 100, the cooling air Fa includes the motor air Fa1 and the inverter air Fa2 as in the seventh embodiment. The motor air Fa1 flows from the outside of the unit housing 101 into the motor space 74 without passing through the inverter space 94. The motor air Fa1 flows to the outside of the unit housing 101 from the motor space 74 without passing through the inverter space 94. The inverter air Fa2 flows from the outside of the unit housing 101 into the inverter space 94 without passing through the motor space 74. The inverter air Fa2 flows to the outside of the unit housing 101 from the inverter space 94 without passing through the motor space 74.

The motor unit 100 includes the motor inlet port 112A and an inverter inlet port 112B as the unit inlet port 112. The motor inlet port 112A allows the motor air Fa1 to flow into the motor space 74. For example, the motor inlet port 112A is provided in the motor upstream wall surface 70a as in the first embodiment. The motor inlet port 112A is located at a position where the motor air Fa1 generated by the blower fan 121 easily flows in.

The inverter inlet port 112B is an inlet port through which the cooling air Fa flows into the inverter space 94 from the outside of the unit housing 101. The inverter inlet port 112B allows the inverter air Fa2 to flow into the inverter space 94. The inverter inlet port 112B is provided in the outer surface of the motor housing 70. For example, the inverter inlet port 112B is provided in the motor outer peripheral wall surface 70c. Each of the motor inlet port 112A and the inverter inlet port 112B corresponds to the housing inlet port.

The EPU 50 includes a guide duct 790. The guide duct 790 guides the cooling air Fa to the unit inlet port 112. The cooling air Fa is guided to the unit inlet port 112 when flowing through an inside of the guide duct 790. The guide duct 790 is provided outside the unit housing 101. For example, the guide duct 790 extends along the outer surface of the unit housing 101.

In the present embodiment, the guide duct 790 guides the inverter air Fa2 generated by the blower fan 121 to the inverter inlet port 112B. The inverter air Fa2 is guided to the inverter inlet port 112B when flowing through the inside of the guide duct 790. The guide duct 790 spans the blower device 120 and the inverter inlet port 112B. The guide duct 790 may guide the motor air Fa1 to the motor inlet port 112A. In a configuration in which the guide duct 790 is in communication with both the motor inlet port 112A and the inverter inlet port 112B, the motor air Fa1 in the cooling air Fa flowing through the guide duct 790 flows into the motor inlet port 112A, and the inverter air Fa2 flows into the inverter inlet port 112B.

The motor unit 100 includes the motor outlet port 114A and the inverter outlet port 114B as the unit outlet port 114. The motor outlet port 114A allows the motor air Fa1 from the motor space 74 to flow to the outside of the unit housing 101. For example, the motor outlet port 114A is provided in the motor outer peripheral wall surface 70c as in the seventh embodiment.

The inverter outlet port 114B allows the inverter air Fa2 from the inverter space 94 to flow to the outside of the unit housing 101. For example, the inverter outlet port 114B is provided in the inverter outer peripheral wall surface 90c. Each of the motor outlet port 114A and the inverter outlet port 114B corresponds to housing outlet port.

According to the present embodiment, the unit inlet port 112 and the unit outlet port 114 are provided such that the cooling air Fa flowing into the unit inlet port 112 flows out from the unit outlet port 114 through only one of the motor space 74 and the inverter space 94. In the configuration, the motor space 74 and the inverter space 94 are individually cooled by the cooling air Fa. Therefore, the heat applied to the cooling air Fa in one of the motor space 74 and the inverter space 94 can be prevented from flowing into the other together with the cooling air Fa. Accordingly, a decrease in an effect of cooling one of the motor space 74 and the inverter space 94 caused by the heat generated in the other can be limited.

In the present embodiment, the motor air Fa1 flows into the motor space 74 from the motor inlet port 112A, and then flows out from the motor outlet port 114A without passing through the inverter space 94. In the configuration, in the motor space 74 and the inverter space 94, only the motor space 74 is cooled by the motor air Fa1. Therefore, heat in the inverter space 94 can be prevented from being applied to the motor air Fa1 and the heat can be prevented from flowing into the motor space 74 together with the motor air Fa1. Accordingly, a decrease in an effect of cooling the motor space 74 by the motor air Fa1 caused by the heat in the inverter space 94 can be limited.

The inverter air Fa2 flows into the inverter space 94 from the inverter inlet port 112B, and then flows out from the inverter outlet port 114B without passing through the motor space 74. In the configuration, in the motor space 74 and the inverter space 94, only the inverter space 94 is cooled by the inverter air Fa2. Therefore, heat in the motor space 74 can be prevented from being applied to the inverter air Fa2 and the heat can be prevented from flowing to the inverter space 94 together with the inverter air Fa2. Accordingly, a decrease in an effect of cooling the inverter space 94 by the inverter air Fa2 caused by the heat in the motor space 74 can be limited. In particular, in a situation where the heat of the motor 61 is more than the heat of the inverter 81, preventing the heat of the motor 61 from flowing into the inverter space 94 together with the cooling air Fa is effective in enhancing the effect of cooling the inverter 81.

### <Fourteenth Embodiment>

In the thirteenth embodiment, only one blower fan 121 as the cooling air fan is provided for the motor unit 100. Meanwhile, in a fourteenth embodiment, multiple cooling air fans are provided for the motor unit 100. Configurations, operations, and effects not particularly described in the fourteenth embodiment are the same as those of the thirteenth embodiment. In the fourteenth embodiment, differences from the thirteenth embodiment will be mainly described.

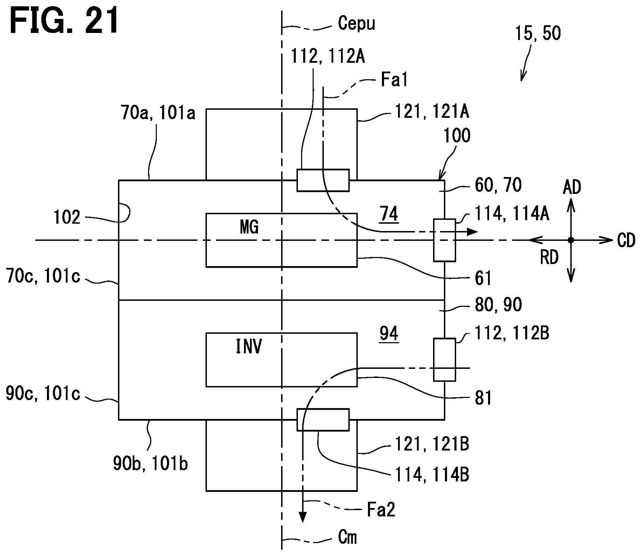

As shown in FIG. 21, the EPU 50 includes a motor fan 121A and an inverter fan 121B as the blower fan 121. The motor fan 121A is a fan for causing the motor air Fa1 to flow through the motor space 74. The motor fan 121A is provided in at least one of the motor inlet port 112A and the motor outlet port 114A. For example, the motor fan 121A is provided on an upstream side of the motor air Fa1 with respect to the motor inlet port 112A. The motor fan 121A blows air toward the motor inlet port 112A to cause the motor air Fa1 to flow into the motor inlet port 112A. In the motor housing 70, as the motor air Fa1 flows into the motor inlet port 112A, the motor air Fa1 flows out from the motor outlet port 114A.

As in the first embodiment, the motor inlet port 112A is provided in the motor upstream wall surface 70a. The motor fan 121A is provided at a position aligned with the motor inlet port 112A in the axial direction AD. The motor fan 121A is arranged on the motor housing 70 in the axial direction AD.

The inverter fan 121B is a fan for causing the inverter air Fa2 to flow through the inverter space 94. The inverter fan 121B is provided in at least one of the inverter inlet port 112B and the inverter outlet port 114B. For example, the inverter fan 121B is provided on a downstream side of the inverter air Fa2 with respect to the inverter outlet port 114B. The inverter fan 121B blows air toward a side opposite to the inverter outlet port 114B to cause the inverter air Fa2 to flow out from the inverter outlet port 114B. The inverter fan 121B sucks the inverter air Fa2 from the inverter outlet port 114B. In the motor unit 100, as the inverter air Fa2 flows out from the inverter outlet port 114B, the inverter air Fa2 flows into the inverter inlet port 112B.

The inverter outlet port 114B is located in the inverter downstream wall surface 90b. The inverter fan 121B is provided at a position aligned with the inverter outlet port 114B in the axial direction AD. The inverter fan 121B is arranged on the inverter housing 90 in the axial direction AD. The inverter fan 121B is located on a side opposite to the motor fan 121A with the motor unit 100 interposed therebetween in the axial direction AD.

### <Fifteenth Embodiment>

In the first embodiment, the cooling air Fa is configured to flow into the inverter space 94 after passing through the motor space 74. Meanwhile, in a fifteenth embodiment, the cooling air Fa is configured to flow into the motor space 74 after passing through the inverter space 94. Configurations, operations, and effects not particularly described in the fifteenth embodiment are the same as those of the first embodiment. In the fifteenth embodiment, differences from the first embodiment will be mainly described.

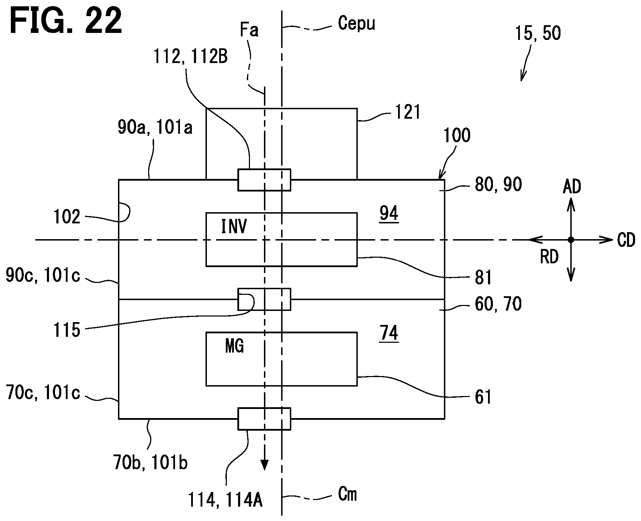

As shown in FIG. 22, in the EPU 50, the inverter device 80 is located on the upwind side of the propeller wind with respect to the motor device 60. The inverter device 80 is provided between the propeller 20 and the motor device 60.

In the unit housing 101, the unit upstream wall surface 101a is formed by the inverter housing 90. The inverter housing 90 has an inverter upstream wall surface 90a. The inverter upstream wall surface 90a is included in the unit upstream wall surface 101a. The inverter upstream wall surface 90a is formed by the upstream plate 106. The unit downstream wall surface 101b is formed by the motor housing 70. The motor housing 70 has a motor downstream wall surface 70b. The motor downstream wall surface 70b is included in the unit downstream wall surface 101b. The motor downstream wall surface 70b is formed by the downstream plate 107.

As in the thirteenth embodiment, the motor unit 100 includes the inverter inlet port 112B as the unit inlet port 112. The inverter inlet port 112B is provided, for example, in the inverter upstream wall surface 90a. The inverter inlet port 112B is located at a position where the cooling air Fa generated by the blower fan 121 easily flows in. As in the seventh embodiment, the motor unit 100 includes the motor outlet port 114A as the unit outlet port 114. The motor outlet port 114A is provided, for example, in the motor downstream wall surface 70b.

The cooling air Fa flows into the inverter inlet port 112B from the outside of the motor unit 100 as the blower fan 121 blows air. The cooling air Fa cools the inverter 81 in the inverter space 94 and then flows into the motor space 74 through the unit connection hole 115. The cooling air Fa cools the motor 61 in the motor space 74 and then flows to the outside of the motor unit 100 through the motor outlet port 114A.

According to the present embodiment, the unit inlet port 112 and the unit outlet port 114 are provided such that the cooling air Fa flowing into the unit inlet port 112 passes through the inverter space 94, then passes through the motor space 74 and flows out from the unit outlet port 114. In the configuration, the inverter 81 is cooled by the cooling air Fa to which the heat of the motor 61 is not applied. Therefore, the effect of cooling the inverter 81 by the cooling air Fa can be enhanced. Accordingly, occurrence of an abnormality in the EPU 50 caused by an excessive increase in the temperature of the inverter 81 can be reduced. In particular, in a situation where the heat of the motor 61 is more than the heat of the inverter 81, cooling the inverter 81 by the cooling air Fa before the heat of the motor 61 is applied to the cooling air Fa is effective in enhancing the effect of cooling the inverter 81.

### <Sixteenth Embodiment>

In the first embodiment, the blower fan 121 is provided at the unit inlet port 112. Meanwhile, in a sixteenth embodiment, the blower fan 121 is provided at the unit outlet port 114. Configurations, operations, and effects not particularly described in the sixteenth embodiment are the same as those of the first embodiment. In the sixteenth embodiment, differences from the first embodiment will be mainly described.

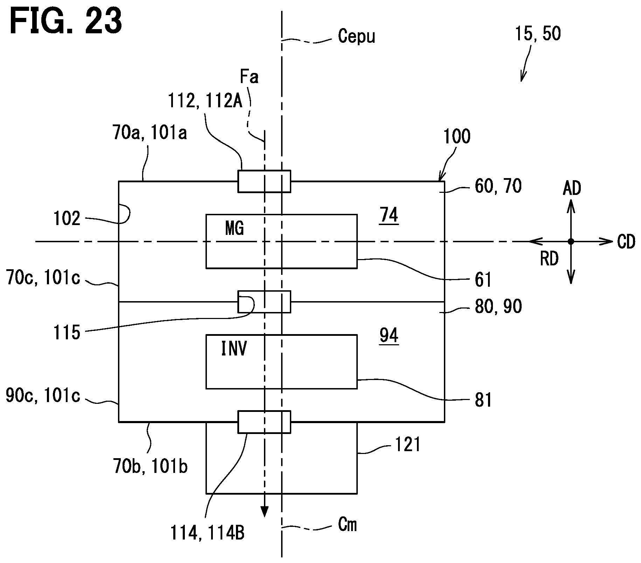

As shown in FIG. 23, the blower fan 121 is provided on the downstream side of the cooling air Fa with respect to the unit outlet port 114. The blower fan 121 is located on the downwind side of the propeller wind with respect to the motor unit 100. The blower fan 121 is located on a side opposite to the propeller 20 with the motor unit 100 interposed therebetween in the axial direction AD. The blower fan 121 blows air toward a side opposite to the unit outlet port 114 to cause the cooling air Fa to flow out from the unit outlet port 114. The blower fan 121 sucks the cooling air Fa from the unit outlet port 114. In the motor unit 100, as the cooling air Fa flows out from the unit outlet port 114, the cooling air Fa flows into the unit inlet port 112.

### <Seventeenth Embodiment>

In the first embodiment, the motor housing 70 and the inverter housing 90 are arranged in the axial direction AD. Meanwhile, in a seventeenth embodiment, the motor housing 70 and the inverter housing 90 are arranged in the radial direction RD. Configurations, operations, and effects not particularly described in the seventeenth embodiment are the same as those of the first embodiment. In the seventeenth embodiment, differences from the first embodiment will be mainly described.

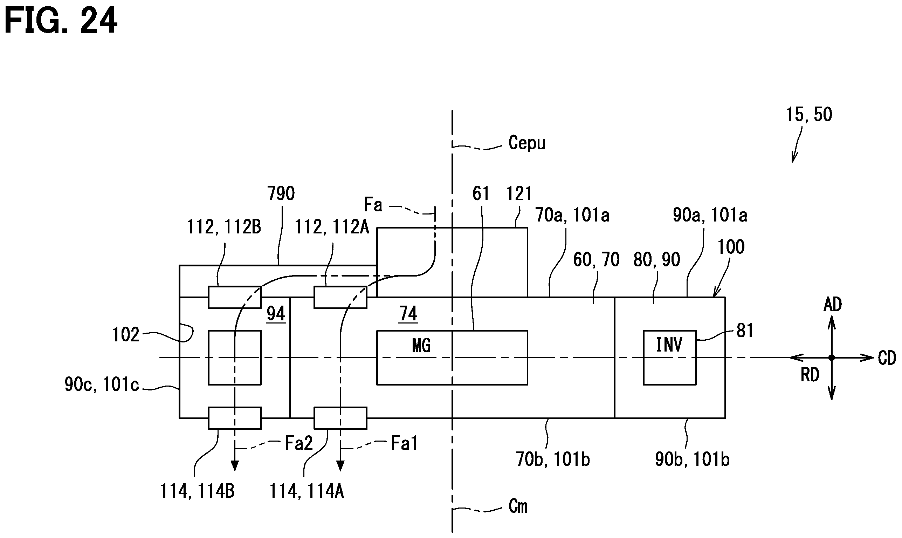

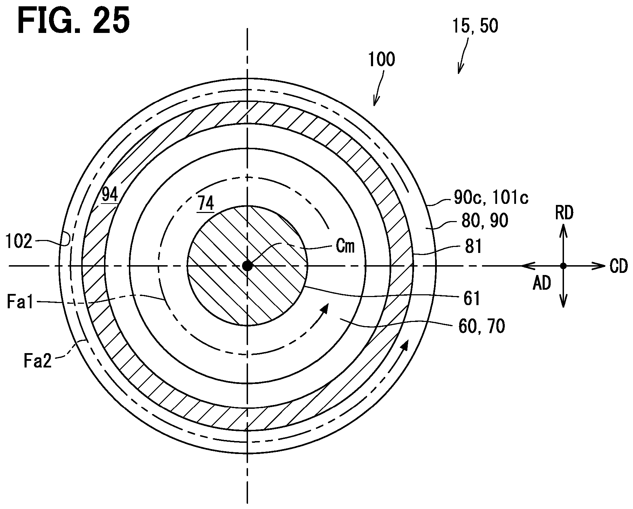

As shown in FIGS. 24 and 25, in the motor unit 100, the motor device 60 and the inverter device 80 are arranged in the radial direction RD. The inverter device 80 is provided on the radially outer side with respect to the motor device 60. In the unit housing 101, the inverter housing 90 is provided on the radially outer side with respect to the motor housing 70. The inverter housing 90 extends in an annular shape in the circumferential direction CD along an outer peripheral surface of the motor housing 70. The motor space 74 is provided on the radially inner side with respect to the inverter space 94. The inverter space 94 extends in an annular shape in the circumferential direction CD along the motor space 74.

In the unit housing 101, the unit outer peripheral wall surface 101c is formed by the inverter housing 90. The unit outer peripheral wall surface 101c includes the inverter outer peripheral wall surface 90c. Each of the unit upstream wall surface 101a and the unit downstream wall surface 101b is formed by the motor housing 70 and the inverter housing 90. The unit upstream wall surface 101a includes the motor upstream wall surface 70a and the inverter upstream wall surface 90a. The unit downstream wall surface 101b includes the motor downstream wall surface 70b and the inverter downstream wall surface 90b.

In the motor housing 70, the motor inlet port 112A is provided in the motor upstream wall surface 70a. The motor outlet port 114A is provided in the motor downstream wall surface 70b. Multiple motor inlet ports 112A and multiple motor outlet ports 114A are arranged in the circumferential direction CD. The inverter inlet port 112B is provided in the inverter upstream wall surface 90a. The inverter outlet port 114B is provided in the inverter downstream wall surface 90b. Multiple inverter inlet ports 112B and multiple inverter outlet ports 114B are arranged in the circumferential direction CD.

In the present embodiment, as in the thirteenth embodiment, the cooling air Fa passes through only one of the motor space 74 and the inverter space 94 and flows out from the unit outlet port 114. The EPU 50 includes the guide duct 790. Unlike the thirteenth embodiment, the guide duct 790 is in communication with both the motor inlet port 112A and the inverter inlet port 112B. The guide duct 790 guides the motor air Fa1 in the cooling air Fa to the motor inlet port 112A and guides the inverter air Fa2 to the inverter inlet port 112B.

### <Eighteenth Embodiment>

In the seventeenth embodiment, the motor unit 100 includes one motor housing 70 and one inverter housing 90. Meanwhile, in the eighteenth embodiment, in the motor unit 100, the number of at least one of the motor housing 70 and the inverter housing 90 is multiple. Configurations, operations, and effects not particularly described in the eighteenth embodiment are the same as those of the seventeenth embodiment. In the eighteenth embodiment, differences from the seventeenth embodiment will be mainly described.

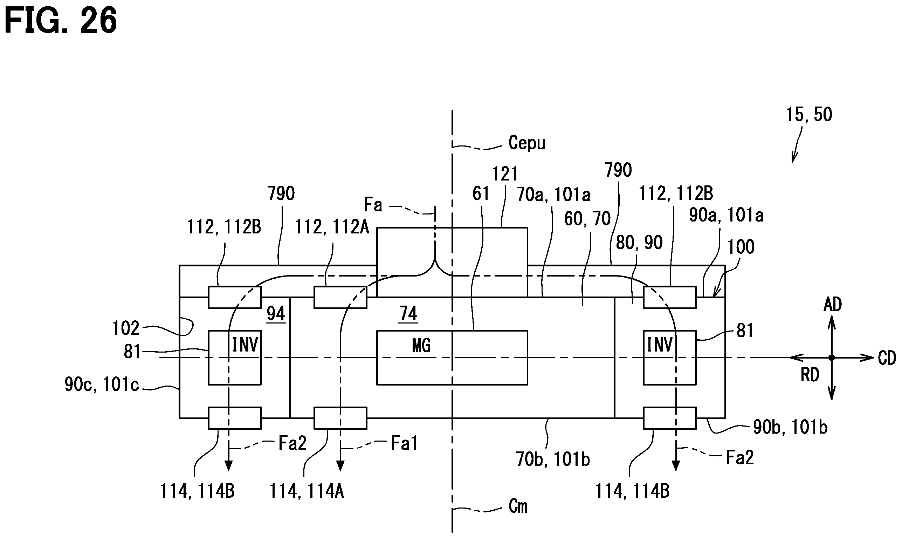

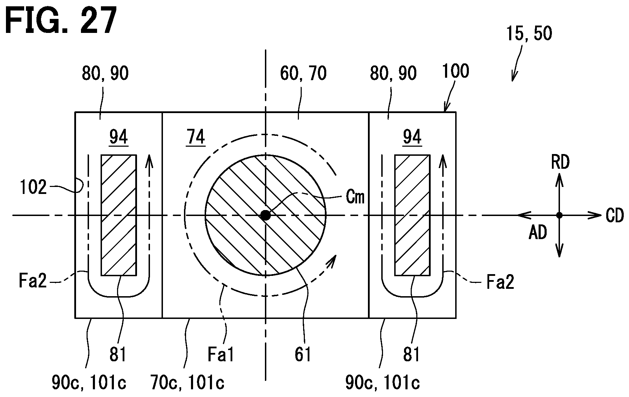

As shown in FIGS. 26 and 27, the motor unit 100 includes one motor housing 70 and multiple inverter housings 90. The unit housing 101 includes one motor housing 70 and multiple inverter housings 90. For example, the unit housing 101 includes two inverter housings 90. The motor housing 70 and the inverter housings 90 are arranged in the radial direction RD. For example, the two inverter housings 90 are arranged in the radial direction RD with the one motor housing 70 interposed therebetween. Each of the multiple inverter housings 90 has the inverter space 94 and accommodates the inverter 81.

In the present embodiment, as in the seventeenth embodiment, the cooling air Fa passes through only one of the motor space 74 and the inverter space 94 and flows out from the unit outlet port 114. Regarding the multiple inverter housings 90, the inverter air Fa2 flowing through one of the inverter spaces 94 flows to the outside of the motor unit 100 without flowing through the other of the inverter spaces 94. Therefore, heat of one inverter 81 is prevented from flowing into the other inverter space 94 together with the inverter air Fa2.

### <Other Embodiments>

The disclosure in the present description is not limited to the illustrated embodiments. The disclosure encompasses the illustrated embodiments and modifications thereof made by those skilled in the art. For example, the disclosure is not limited to the combination of components and elements described in the embodiments, and various modifications and implementations can be performed. The disclosure may be implemented in various combinations. The disclosure may have an additional portion that can be added to the embodiments. The disclosure encompasses the omission of components and elements of the embodiments. The disclosure encompasses the replacement or combination of components, elements between one embodiment and another embodiment. The disclosed technical scope is not limited to those described in the embodiments. The disclosed technical scope is indicated by the description of the claims, and should be construed to include all changes within the meaning and range equivalent to the description of the claims.

In each of the embodiments described above, the foreign matter restriction portion such as the labyrinth structure portion 700 may be provided at any position with respect to the unit housing 101 as long as the foreign matter MF can be restricted from entering the accommodating housing from the housing inlet port. For example, the foreign matter restriction portion may be provided inside the unit housing 101 or inside the blower device 120. For example, in the first embodiment described above, the labyrinth structure portion 700 may be provided inside the blower case 125 or inside the motor housing 70.

In each of the embodiments described above, components such as the smoothing capacitor unit 580 and the arm switch unit 530 may be arranged in any manner inside the inverter housing 90. For example, the arm switch unit 530 may be provided on the first drive board surface 510a rather than the inverter inner wall surface 91a. The arm switch unit 530 may be provided on the radially inner side with respect to the smoothing capacitor unit 580. Further, multiple drive gaps 94c may be arranged in the circumferential direction CD. The drive gap 94c may not be provided between the drive board 510 and the inverter inner wall surface 91a.

In each of the embodiments described above, the motor 61 may not be a dual-rotor motor. For example, the motor 61 may be a single-rotor motor including one rotor. The motor 61 may not be an axial gap-type motor. For example, the motor 61 may be a radial gap-type motor. In the motor 61, for example, the stator is provided on the radially outer side with respect to the rotor.

In each of the embodiments described above, the cooling air fan such as the blower fan 121 may be provided anywhere as long as the cooling air Fa flows to the inside of the unit housing 101. For example, in the first embodiment described above, the blower fan 121 may be arranged in the radial direction RD on the unit housing 101. The cooling air fan may be provided inside the unit housing 101. For example, in the first embodiment described above, the blower fan 121 may be accommodated in the inverter housing 90. In the tenth embodiment described above, the rotors 300a, 300b each functioning as the cooling air fan are accommodated in the motor housing 70.

In each of the embodiments described above, the cooling air fan may not be connected to the motor 61. For example, in the first embodiment described above, the blower fan 121 may be provided to be separated from the EPU shaft 51. In the configuration, the blower fan 121 is rotated by driving of a driving source different from the motor 61. For example, the blower fan 121 may be an electric fan.

In each of the embodiments described above, the EPU 50 may not include the cooling air fan. For example, as in the eighth embodiment, the EPU 50 may not include the blower device 120. In the configuration, it is preferable that the propeller wind flows into the unit inlet port 112 as the cooling air Fa. For example, the unit inlet port 112 is preferably provided at a position aligned with the blade 21 in the axial direction AD while facing the upwind side of the propeller wind.

In each of the embodiments described above, in the unit housing 101, the unit space 102 may not be partitioned into the motor space 74 and the inverter space 94. For example, in the first embodiment, the unit housing 101 may not include the partition plate 108. In the configuration, as long as the motor space 74 is provided at a position in communication with the unit inlet port 112 and the inverter space 94 is provided at a position in communication with the unit outlet port 114, the cooling air Fa also flows easily into the inverter space 94 from the motor space 74.

In each of the embodiments described above, at least one of the motor 61 and the inverter 81 may be accommodated in the accommodating housing such as the unit housing 101. For example, in the first embodiment, the unit housing 101 may accommodate only one of the motor 61 and the inverter 81. For example, in a configuration in which the motor 61 is accommodated in the unit housing 101, the motor 61 is cooled by the cooling air Fa flowing into the unit housing 101.

In each of the embodiments described above, the eVTOL 10 may be configured such that at least one propeller 20 is driven by at least one EPU 50. For example, one propeller 20 may be driven by multiple EPUs 50, or multiple propellers 20 may be driven by one EPU 50.

In each of the embodiments described above, the eVTOL 10 may not be a tilt-rotor aircraft. For example, in the eVTOL 10, the multiple propellers 20 may include a lift-propeller 20 and a cruise-propeller 20. In the eVTOL 10, for example, the lift-propeller 20 is driven when ascending, and the cruise-propeller 20 is driven when moving forward.

In each of the embodiments described above, the flight vehicle on which the EPU 50 is mounted may not be the vertical take-off and landing aircraft as long as being of an electric type. For example, the flight vehicle may be a flight vehicle capable of taking off and landing while gliding, as an example of the electric aircraft. The flight vehicle may be a rotorcraft, or a fixed-wing aircraft. The flight vehicle may be an unmanned flight vehicle carrying no person.

In each of the embodiments described above, the moving object on which the **EPU** 50 is mounted may not be a flight vehicle as long as the moving object is movable by rotation of the rotary body. For example, the moving object may be a vehicle, a ship, a construction machine, or an agricultural machine. For example, when the moving object is a vehicle, a construction machine, or the like, the rotary body is a movement-wheel or the like, and an output shaft portion is an axle or the like. When the moving object is a ship, the rotary body is a propulsion-screw propeller or the like, and the output shaft portion is a propeller shaft or the like.

### (Disclosure of Technical Ideas)

This description discloses multiple technical ideas described in multiple items listed below. Some items may be written in a multiple dependent form with subsequent items referring to the preceding item as an alternative. Some items may be written in a multiple dependent form referring to another multiple dependent form. These items written in a multiple dependent form define multiple technical ideas.

### (Technical idea 1)

A drive device (50) is to be driven by electric power. The drive device comprises: a motor (61) configured to be supplied with electric power; an inverter (81) configured to convert the electric power supplied to the motor; an accommodating housing (101) accommodating at least one of the motor and the inverter; a housing inlet port (112, 112A, 112B) provided in the accommodating housing and configured to allow cooling air (Fa, Fa1, Fa2), which is to cool an inside of the accommodating housing, to flow from an outside of the accommodating housing to the inside; a housing outlet port (114, 114A, 114B) provided in the accommodating housing and configured to allow the cooling air to flow out to the outside of the accommodating housing; and a foreign matter restriction portion (700, 750, 770) configured to restrict foreign matter (MF) from entering the inside of the accommodating housing from the housing inlet port.

### (Technical idea 2)

The drive device is according to technical idea 1. The housing inlet port and the housing outlet port are provided to allow the cooling air, which flows from the housing inlet port to the inside of the accommodating housing, to pass through a space (74) accommodating the motor, then pass through a space (94) accommodating the inverter, and flow out from the housing outlet port.

### (Technical idea 3)

The drive device is according to technical idea 1. The housing inlet port and the housing outlet port are provided to allow the cooling air, which flows from the housing inlet port to the inside of the accommodating housing, to pass through a space (94) accommodating the inverter, then pass through a space (74) accommodating the motor, and flow out from the housing outlet port.

### (Technical idea 4)

The drive device is according to technical idea 1. The housing inlet port and the housing outlet port are provided to allow the cooling air, which flows from the housing inlet port to the inside of the accommodating housing, to pass through only one of a space (74) accommodating the motor and a space (94) accommodating the inverter and flow out from the housing outlet port.

### (Technical idea 5)

The drive device according to any one of technical ideas 1 to 4, further comprises: a cooling air fan (121, 121A, 121B, 300a, 300b) configured to cause the cooling air, which flows into the housing inlet port, to flow out from the housing outlet port.

### (Technical idea 6)

The drive device is according to any one of technical ideas 1 to 5. The foreign matter restriction portion includes a labyrinth structure portion (700) having a labyrinth passage (710) that is in communication with the housing inlet port and is bent to restrict entry of the foreign matter.

### (Technical idea 7)

The drive device is according to technical idea 6. The drive device is provided to a moving object (10), which is configured to move by rotation of a rotary body (20), and driven by electric power to rotate the rotary body. The labyrinth structure portion includes a labyrinth passage inlet port (711) configured to allow the cooling air to flow into the labyrinth passage. The labyrinth passage inlet port is provided to face a downwind side of rotation wind generated by rotation of the rotary body.

### (Technical idea 8)

The drive device is according to any one of technical ideas 1 to 7. The foreign matter restriction portion includes a foreign matter separator (750) configured to to separate the cooling air and the foreign matter by a centrifugal force to restrict entry of the foreign matter.

### (Technical idea 9)

The drive device is according to technical idea 8. The drive device is provided to a moving object (10), which is configured to move by rotation of a rotary body (20), and driven by electric power to rotate the rotary body. The foreign matter separator includes a foreign matter outlet port (763) configured to discharge the foreign matter therefrom. The foreign matter outlet port is provided to face a downwind side of rotation wind generated by rotating the rotary body.

### (Technical idea 10)

The drive device is according to any one of technical ideas 1 to 9. The foreign matter restriction portion includes a filtration filter (770) configured to filter the cooling air to restrict entry of the foreign matter.

### (Technical idea 11)

The drive device according to any one of technical ideas 1 to 10, further comprises: an inverter device (80) including the inverter and an inverter housing (90) included in the accommodating housing and accommodating the inverter. The inverter device includes a switch component (530) configured to convert the electric power, and a capacitor component (527, 528, 580) electrically connected to the switch component. The switch component and the capacitor component are provided, such that the cooling air cools the capacitor component, and then cools the switch component.

### (Technical idea 12)

The drive device is according to technical idea 11. The inverter device includes a wiring board (510) having an outer peripheral end (512) extending along an inner wall surface (91a) of the inverter housing and mounted with the capacitor component. The switch component is provided between the capacitor component and the inner wall surface, such that the cooling air flowing toward the inner wall surface along the wiring board cools the capacitor component, and then cools the switch component.

### (Technical idea 13)

The drive device is according to technical idea 12. The outer peripheral end and the inner wall surface define a board gap (94c) therebetween to allow the cooling air to flow therethrough. The switch component is provided, such that the cooling air flows through the board gap after cooling the switch component.

### (Technical idea 14)

The drive device is according to technical idea 12 or 13. The switch component is provided on the inner wall surface, such that heat of the switch component is transferred to the inner wall surface.

### (Technical idea 15)

The drive device is according to any one of technical ideas 1 to 14. The drive device is to be provided to a flight vehicle (10) and to be driven by electric power to cause the flight vehicle to fly.

## Claims

1. A drive device (50) to be driven by electric power, the drive device comprising:
a motor (61) configured to be supplied with electric power;
an inverter (81) configured to convert the electric power supplied to the motor;
an accommodating housing (101) accommodating at least one of the motor and the inverter;
a housing inlet port (112, 112A, 112B) provided in the accommodating housing and configured to allow cooling air (Fa, Fa1, Fa2), which is to cool an inside of the accommodating housing, to flow from an outside of the accommodating housing to the inside;
a housing outlet port (114, 114A, 114B) provided in the accommodating housing and configured to allow the cooling air to flow out to the outside of the accommodating housing; and
a foreign matter restriction portion (700, 750, 770) configured to restrict foreign matter (MF) from entering the inside of the accommodating housing from the housing inlet port.

2. The drive device according to claim 1, wherein
the housing inlet port and the housing outlet port are provided to allow the cooling air, which flows from the housing inlet port to the inside of the accommodating housing, to pass through a space (74) accommodating the motor, then pass through a space (94) accommodating the inverter, and flow out from the housing outlet port.

3. The drive device according to claim 1, wherein
the housing inlet port and the housing outlet port are provided to allow the cooling air, which flows from the housing inlet port to the inside of the accommodating housing, to pass through a space (94) accommodating the inverter, then pass through a space (74) accommodating the motor, and flow out from the housing outlet port.

4. The drive device according to claim 1, wherein
the housing inlet port and the housing outlet port are provided to allow the cooling air, which flows from the housing inlet port to the inside of the accommodating housing, to pass through only one of a space (74) accommodating the motor and a space (94) accommodating the inverter and flow out from the housing outlet port.

5. The drive device according to any one of claims 1 to 4, further comprising:
a cooling air fan (121, 121A, 121B, 300a, 300b) configured to cause the cooling air, which flows into the housing inlet port, to flow out from the housing outlet port.

6. The drive device according to any one of claims 1 to 4, wherein
the foreign matter restriction portion includes a labyrinth structure portion (700) having a labyrinth passage (710) that is in communication with the housing inlet port and is bent to restrict entry of the foreign matter.

7. The drive device according to claim 6, wherein
the drive device is provided to a moving object (10), which is configured to move by rotation of a rotary body (20), and driven by electric power to rotate the rotary body,
the labyrinth structure portion includes a labyrinth passage inlet port (711) configured to allow the cooling air to flow into the labyrinth passage, and
the labyrinth passage inlet port is provided to face a downwind side of rotation wind generated by rotation of the rotary body.

8. The drive device according to any one of claims 1 to 4, wherein
the foreign matter restriction portion includes a foreign matter separator (750) configured to to separate the cooling air and the foreign matter by a centrifugal force to restrict entry of the foreign matter.

9. The drive device according to claim 8, wherein
the drive device is to be provided to a moving object (10), which is configured to move by rotation of a rotary body (20), and to be driven by electric power to rotate the rotary body,
the foreign matter separator includes a foreign matter outlet port (763) configured to discharge the foreign matter therefrom, and
the foreign matter outlet port is provided to face a downwind side of rotation wind generated by rotating the rotary body.

10. The drive device according to any one of claims 1 to 4, wherein
the foreign matter restriction portion includes a filtration filter (770) configured to filter the cooling air to restrict entry of the foreign matter.

11. The drive device according to any one of claims 1 to 4, further comprising:
an inverter device (80) including the inverter and an inverter housing (90) included in the accommodating housing and accommodating the inverter, wherein
the inverter device includes
a switch component (530) configured to convert the electric power, and
a capacitor component (527, 528, 580) electrically connected to the switch component, and
the switch component and the capacitor component are provided, such that the cooling air cools the capacitor component, and then cools the switch component.

12. The drive device according to claim 11, wherein
the inverter device includes a wiring board (510) having an outer peripheral end (512) extending along an inner wall surface (91a) of the inverter housing and mounted with the capacitor component, and
the switch component is provided between the capacitor component and the inner wall surface, such that the cooling air flowing toward the inner wall surface along the wiring board cools the capacitor component, and then cools the switch component.

13. The drive device according to claim 12, wherein
the outer peripheral end and the inner wall surface define a board gap (94c) therebetween to allow the cooling air to flow therethrough, and
the switch component is provided, such that the cooling air flows through the board gap after cooling the switch component.

14. The drive device according to claim 12, wherein
the switch component is provided on the inner wall surface, such that heat of the switch component is transferred to the inner wall surface.

15. The drive device according to any one of claims 1 to 4, wherein
the drive device is to be provided to a flight vehicle (10) and to be driven by electric power to cause the flight vehicle to fly.
